(19) **Europäisches Patentamt**
**European Patent Office**
**Office européen des brevets**

(11) **EP 1 978 758 B1**

(12) **EUROPEAN PATENT SPECIFICATION**

(45) Date of publication and mention
of the grant of the patent:
**11.04.2012 Bulletin 2012/15**

(51) Int Cl.:
*H04Q 3/00* (2006.01)    *H04L 29/06* (2006.01)

(21) Application number: **07010735.4**

(22) Date of filing: **30.05.2007**

(54) **Technique for controlling a service composition process in a telecommunication network**

Technik zur Ansteuerung eines Dienstzusammenstellungsprozesses in einem
Telekommunikationsnetzwerk

Technique de contrôle d'un procédé de composition de service dans un réseau de télécommunication

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **02.04.2007 PCT/EP2007/002956**

(43) Date of publication of application:
**08.10.2008 Bulletin 2008/41**

(73) Proprietor: **Telefonaktiebolaget L- M Ericsson
(publ)
164 83 Stockholm (SE)**

(72) Inventors:
• **LEVENSHTEYN, Roman
52074 Aachen (DE)**
• **Fikouras, Ioannis
52477 Alsdorf (DE)**

(74) Representative: **Röthinger, Rainer
Wuesthoff & Wuesthoff
Patent- und Rechtsanwälte
Schweigerstrasse 2
81541 München (DE)**

(56) References cited:
**WO-A-98/32293        US-A1- 2005 125 738
US-B1- 6 330 710**

• **KOCAN K F ET AL: "A novel software approach
for service brokering in advanced service
architectures" BELL LABS TECHNICAL
JOURNAL, vol. 11, no. 1, March 2006 (2006-03),
pages 5-20, XP002460553**
• **BEA SYSTEM INC: "BEA WebLogic SIP Server;
Developing Applications with WebLogic SIP
Server Version 3.0"[Online] 13 December 2006
(2006-12-13), XP002460438 Retrieved from the
Internet: URL:http://e-docs.bea.com/wlcp/
wlss30/pdf/ programming.pdf> [retrieved on
2007-11-28]**
• **"Digital cellular telecommunications system
(Phase 2+); Universal Mobile
Telecommunications System (UMTS); Network
architecture (3GPP TS 23.002 version 7.1.0
Release 7)" ETSI TS 123 002 V7.1.0, March 2006
(2006-03), XP014034185**

**Description**

**Technical Field**

The present invention relates to the field of service creation, service modification and service execution in a telecommunication network. In particular, the invention relates to a technique for controlling the execution of a composite service with two or more constituting services.

**Background of the Invention**

Operators and service providers are adopting the Internet Protocol (IP) Multimedia Subsystem (IMS) as the preferred implementation for the next generation service delivery platform. As a service delivery platform, IMS supports all kinds of network access technologies, including IP, circuit-switched mobile (such as the Global System for Mobile communication, GSM, standard) and packet-switched mobile (such as the Universal Mobile Telecommunication System, UMTS, standard).

The IMS architecture enables innovative and differentiated person-to-person and person-to-content multimedia services in a standardized manner. With IMS, users are able to add media and participants to an established communication session, to handle presence and group management, and to shift between different communication domains and communication sessions, to name but a few benefits. Moreover, the IMS architecture supports service providers to offer new "all-IP" services in an efficient, unitary and personalized manner.

The IMS architecture can be illustrated in the form of three horizontal layers, with network connectivity mechanisms on a lower layer, session control mechanisms on an intermediate layer and application services on an upper layer. In the IMS architecture, the network connectivity layer serves as the interface to the various access networks. The session control layer implements basic session control functions, and service logic is provided by the application layer.

The core component of the session control layer is the Serving Call Server Control Function (S-CSCF). The S-CSCF provides registration, authentication and session control functionalities. It also implements basic session routing functions of calling and called IMS users. Moreover, the S-CSCF triggers value-added services performed by Application Servers (AS) on the application layer of the IMS architecture. The triggering is controlled by predefined triggering rules that are called Initial Filter Criteria (IFC) and that are stored on a Home Subscriber Server (HSS). The HSS contains subscription-related information and can thus be regarded as a user profile database.

One of the core technologies implemented on the session control layer is the Session Initiation Protocol (SIP). Major functions of SIP include session control and mobility management. As regards session control, SIP is used in IMS for establishing, controlling and terminating sessions potentially involving network-based applications. SIP is also used over the IMS Service Control (ISC) interface between S-CSCF and AS for example to establish media channels. Once media channels have been established, other communication protocols can be used further on.

The IMS application layer is where the service logic is hosted on one or more AS. The services provided by the AS include basic call services such as call forwarding, call waiting, conference calling and so on. Apart from such basic services, IMS also provides more sophisticated services including Push to talk Over Cellular (POC) and multimedia conferencing through SIP-AS.

IMS is capable of interacting with conventional Intelligent Network (IN) services, such as Customized Applications for Mobile Networks Enhanced Logic (CAMEL) services and Intelligent Network Application Part (INAP) services, through the IP Multimedia Services Switching Functions (IM-SSF) to inherit IN services. In addition, IMS includes an Application Programming Interface (API) through the Open Services Access Gateway (OSA-GW). The OSA-GW allows any service provider to use network resources, the so-called OSA Service Capability Servers (OSA-SCS), for providing feature-enriched services tailored to specific needs. In summary, IMS constitutes a comfortable service delivery platform with three open service modes (SIP-AS, IM-SSF and OSA-SCS) and an IFC-based control mechanism for selectively triggering service execution.

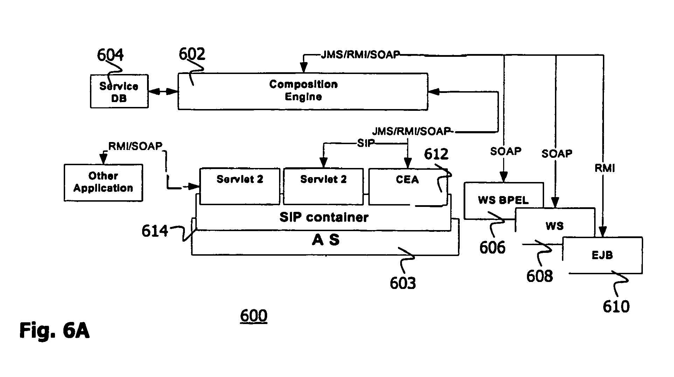

Since user demands become increasingly sophisticated, there is a constant need for deploying new services on service delivery platforms such as IMS. In order to re-use existing services as far as possible, two or more existing services can be aggregated to form a composite service satisfying particular user demands. The 3rd Generation Partnership Project (3GPP) has already proposed a Service Capability Interaction Manager (SCIM; see Fig. 6a of Technical Specification TS 23.002) that is intended to act as a service broker in service interaction scenarios typically encountered in context with composite services.

Composite services offer an added value compared to the sum of the functionalities of their constituting services. As an example for a value added composite service, a location-based weather forecasting service composed of a weather forecasting service on the one hand and a positioning data provision service on the other hand can be envisaged. Clearly, such a composite service provides an added value to its users.

One way to build a composite service in the IMS environment is the chaining of existing SIP services by the S-CSCF under control of IFC. Generally, a SIP service is provided by a SIP application which may in turn consist of one or more SIP servlets. A servlet is a Java class, and the instances of this Java class receive and generate responses to requests from client components. Servlets can be generated automatically by Java Server Pages (JSP) or by template engines.

For execution, the servlets are placed in a so-called container. A container is a server component interacting with the servlets during execution. The container is responsible for managing the lifecycle of servlets, for mapping a Universal Resource Locator (URL) to a particular servlet and for ensuring that the URL requestor has the correct access rights. The servlet life cycle managed by the container generally consists of four steps. In a first step, the servlet class is loaded by the container during start-up. In a next step, the container calls the init() method of the servlet. This method invokes an instance of the servlet and has thus to be called before the servlet can service any client requests. After invocation, the servlet may service client requests in a third step. To this end, the container calls the service() method of the servlet for every request. Finally, in a last step, the container calls the destroy() method which takes the servlet out of service.

In the SIP context, the Java Specification Request (JSR) 116 defines a SIP servlet API. JSR 116 provides a framework for the development of SIP servlets and standardises how such SIP servlets interact with the SIP container and how they access SIP functionality (e.g. how they react to SIP messages). Additionally, JSR 116 defines the functionalities for creating a chain of SIP servlets in a SIP container and describes the behaviour of the SIP container during run-time. More specifically, JSR 116 describes how the SIP container propagates SIP requests to SIP applications and to SIP servlets as well as how it handles run-time dependencies between them. The management of these run-time dependencies and the dispatching of SIP messages is handled by a component called SIP Servlet Dispatcher.

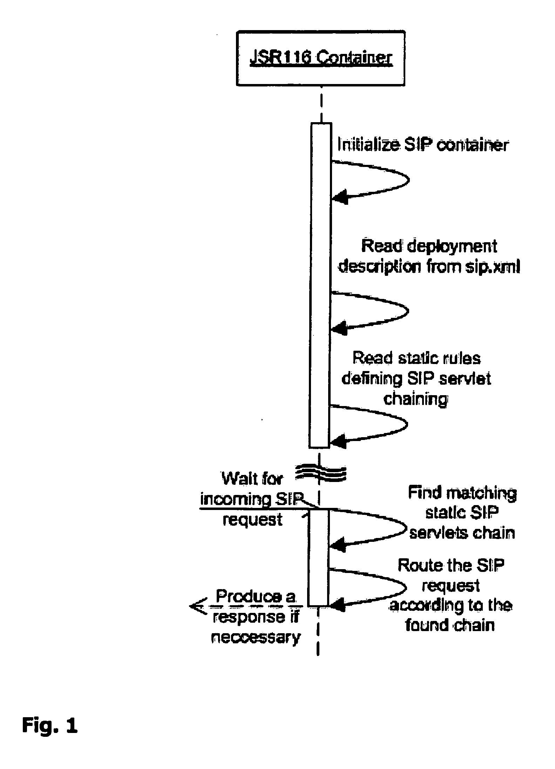

The set of SIP servlets provided by a given SIP application is defined in the deployment descriptor included in a deployment configuration file (e.g. sip.xml) of this SIP application. The deployment descriptor defines rules that specify the conditions (e.g. type of SIP request, headers of incoming request, etc.) under which SIP applications and servlets are invoked, as well as the order of their invocation. Multiple applications and servlets may be invoked as a result of the same incoming SIP request. In this case, the SIP container first composes a chain of SIP servlets (i.e. a composite service) inside a SIP application based on static rules defined in the deployment descriptor associated with the application. In a next step, the SIP container starts execution of the resulting composite service as shown in Fig. 1.

Any conditions formulated in the deployment descriptor implement a limited composition functionality allowing for the static definition of composite services in the form of SIP servlet chains. However, these static SIP servlet chains cannot be altered without a change in the deployment descriptor.

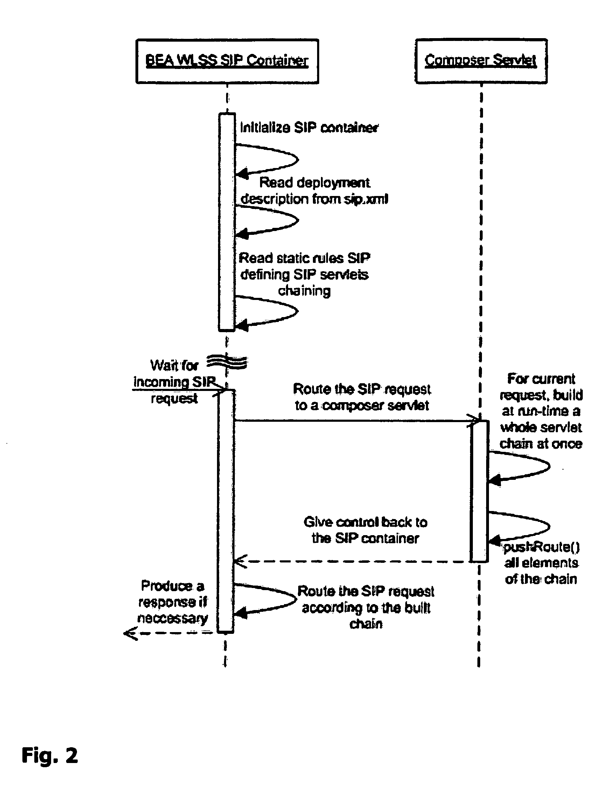

Some tools for creating composite services allow the implementation of a slightly more dynamic behaviour of servlet execution. The BEA WebLogic® SIP Server (WLSS), for example, allows for a run-time definition of a servlet chain by introducing a composer servlet. The composer servlet creates a servlet chain based on algorithms defined during the design of the composer servlet. Control is passed on from the dispatcher to the composer servlet by invoking it as the first component of the servlet chain as shown in Fig. 2. With the WLSS, changes to the previously defined chain of SIP servlets are no longer possible after composition execution starts.

Ongoing work on the upcoming standard JSR 289 is introducing flexible mechanisms for selection and composition of SIP applications. More specifically, JSR 289 introduces a standardised API for developer-defined application router (AR) objects that essentially enable SIP application selection and routing functionality to be influenced at run-time. An AR acts in a similar manner as the BEA composer servlet, with the difference that the AR is invoked after every execution of a SIP application in order to decide which SIP application will be executed next. According to the current draft of JSR 289, an AR is invoked only for initial SIP requests, but not in response to any subsequent requests or responses.

While 3GPP's SCIM, the composer servlet of WLSS and the AR of JSR 289 constitute a foundation for dynamically defining composite services, there is still a need for a technique for controlling the process of composing a composite service in a telecommunication network.

The document "BEA WebLogic SIP server", Version 3.0 by BEA Systems, describes a WLSS 3.0 application based on the JSR 116 standard mentioned above. Fig. 4-1 therein shows the chaining of applications.

The document by K.F. Kocan entitled "A Novel Software Approach for Service Brokering in Advanced Service Architectures", Bell Labs Technical Journal, Vol. 11, No. 1, pp. 5-20, describes a special version of 3GPP's SCIM which is denoted as "Lucent Service Broker". The functionality of the Lucent Service Broker is located on the session control layer in contact to the S-CSCF of IMS.

US 2005/0125738 A1 relates to Artificial Intelligence planning. A planning problem is described by a 3-tuple <I, G, A >, in which I is the complete description of the initial state, G is the partial description of the goal state (in which the problem is solved), and A is the set of executive (primitive) actions. An action sequence S (a plan) is a solution to the problem P, if S can be executed from I and the resulting state contains G. The document suggests separating an estimation of run-time variables from an assignment of service instances. Prior to executing the plan, a Runtime Evaluator checks if the instantiated plan produced by the plan assigner violates any run-time constraints. Only if no constraints are violated, the instantiated plan is executed. The Runtime Evaluator guides the Plan Assigner with alternatives in the pre-execution phase. Conventional planning algorithms use a random or "brute-force" search over the search space, which is the set of possible sequences S. The document suggests that the Runtime Evaluator receives an instantiated plan Pi, and calculates the value of the run-time variables to assess the feasibility of the plan Pi.

Document WO 98/32293 discloses an index Service Script Logic (SSL) created within a Service Control Point (SCP). While in a conventional Intelligent Network (IN) there is a one-to-one relationship between a desired subscriber feature and the effectuating IN service within an SCP, the document suggests that each SSL being executed sets a next-action-variable within the executed SSL.

US 6,330,710 B1 describes a method of composing a software-based service including the step of dynamically selecting software components at an agent based on received service configuration information.

## Summary of the Invention

According to a first aspect, this need is satisfied by a method of controlling a service composition process for a composite service involving at least one telecommunication session for a user of a telecommunication network, the method comprising the following steps that are performed on a service execution platform within an application layer: receiving, from a session control layer, a message relating to a new or an existing telecommunication session; contacting a service compositor with respect to a composite service (the composition of which may already be ongoing or may still have to be initiated) involving the telecommunication session to which the message pertains; receiving, from the service compositor, a first command; initiating execution of the first command; determining run-time information that becomes available in (e.g. temporal or logical) context with execution of the first command; and transmitting the run-time information to the service compositor.

The invention may be implemented in various networks such as an IMS and/or any other IN, and may utilize various communication protocols including SIP. Each constituting service of the composite service may include one or more SIP servlets and/or one or more SIP applications (or may be implemented otherwise). The nature of the SIP servlet dispatcher and of the AR of JSR 289 as central coordinating entities makes the servlet dispatcher and the application router possible points for implementing the control functionality of the present invention. Dynamic service composition control functionality could therefore be easily and elegantly implemented as an extension to dispatcher or application router functionalities.

The first command (which need not be an initial command but may for example also be any subsequent command) received from the service compositor may relate to an execution of one or more first constituting services of the composite service. In such a case, the step of initiating execution of the first command may comprise initiating execution of the one or more first constituting services.

The method may further comprise the steps of receiving, from the service compositor and in response to the transmitted run-time information, a second command; and of initiating execution of the second command. In one scenario, the second command relates to an execution of one or more second constituting services of the composite service, and initiating execution of the second command may comprise executing the one or more second constituting services. In a second scenario, that may be combined with the first scenario, the second or a third command is an indication that the service composition process is completed. In such a scenario, the step of initiating execution of the second or third command may comprise returning control to the session control layer. In a still further scenario, the first command and/or the second command may relate to at least one of the following actions: manipulation, generation and/or transmission of a session-related message towards the session control layer; definition and/or manipulation of variables on the service execution platform; deletion or removal of one or more constituting services on the service execution platform; and execution of service execution platform-specific instructions.

In one variant, a service composition identifier may be received from the service compositor before, during or after any of the method steps discussed above. The service composition identifier relates to a specific service composition process involving the at least one telecommunication session. In case one or more service composition identifiers become available, the method may further comprise the step of maintaining an association between each service composition identifier and one or more sessions involved in the respective composite service. The association between a service composition identifier and the related sessions (or corresponding session identifiers) may thus constitute a 1: n relationship with $n \geq 1$.

The service composition identifier may facilitate the communication between the service compositor and the component in charge of service execution in case several service composition processes are running in parallel. In such a case, the service composition identifier may be included in messages exchanged between the service compositor and the component in charge of service execution for the purpose of addressing a specific composition process. The service composition identifier may, for example, be transmitted to the service compositor upon contacting the service compositor and/or upon transmitting run-time information to the service compositor.

The run-time information transmitted to the service compositor may relate to various aspects in context with execution of the first command. According to a first variant, the run-time information relates to a result of the at least one first constituting service. This result may be an indication if the at least one first constituting service has successfully been executed. According to another variant, the run-time information is temporally related to the execution of the first command and, for example, indicative of changes on the service execution platform that have taken place in close temporal relationship (i.e. shortly before or after) execution of the first command. As an example, changes on the service execution platform may be indicative of a message received from the session control layer. Such message may be a user request to terminate an ongoing service composition process.

According to another aspect of the present invention, a method of controlling a service composition process for a composite service involving at least one telecommunication session for a user of a telecommunication network is provided, the method comprising the steps: receiving, from a service execution component, a notification relating to a composite service involving at least one telecommunication session; analysing, during run-time, a skeleton specifying a service pattern for the composite service to determine at least one first action to be performed by the service execution component; transmitting, to the service execution component, a first command relating to the at least one first action; and receiving, from the service execution component, run-time information that becomes available in context with execution of the first command.

Analysis of a skeleton (i.e. of a composite service model) during run-time allows the introduction of a dynamic behaviour into the process of service composition. The skeleton may thus be used to dynamically control and/or compose one or more telecommunication sessions. Structurally, skeletons need not explicitly contain any telecommunication sessions. Nonetheless, skeletons may include constraints (such as conditions, requirements, limitations, etc.) about sessions, and the result of the execution of one or more of the constituting services can produce one or more telecommunication sessions belonging to the composite service.

The step of analysing the skeleton may comprise determining one or more first constituting services of the composite service. In such a case, the first command transmitted to the service execution component may relate to an execution of the one or more first constituting services.

The method may further comprise the steps of continuing analysing the skeleton taking into account the run-time information to determine at least one second action to be performed by the service execution component; and of transmitting, to the service execution component, a second command relating to the at least one second action. During the continued analysis of the skeleton, one or more second constituting services of the composite service may be determined. The second command transmitted to the service execution component may then relate to an execution of the one more second constituting services.

In a further variant, an identifier relating to the ongoing service composition process is transmitted to the service execution component. As stated above, this service composition identifier may be used in subsequent messaging for addressing a specific service composition process. As an example, the service composition identifier may be received from the service execution component together with the initial notification or the run-time information.

In one variant, the step of analysing the skeleton may comprise selecting at least one first or second constituting service out of a plurality of candidate services. This selection can be performed taking into account constraints (such as conditions, requirements, limitations, etc.) specified in service references included in the skeleton. Alternatively, or in addition, the selection can be performed taking into account constraints (e.g. conditions, requirements, limitations, etc.) specified in a service description associated with each referenced service. Service descriptions may be stored in a database that is accessible during run-time. The skeleton (including information concerning the service pattern and the service references) may be stored in the same or in another database.

The selection may further be performed taking into account run-time information. In one implementation, the selection is performed taking into account at least one of the following: information obtained from a service that has been previously executed, availability information pertaining to one or more candidate services, status information pertaining to one or more telecommunication sessions, a user request, one or more user preferences, and subscription information pertaining to the user.

The selection may also be performed taking into account constraints (such as conditions, requirements, limitations, etc.) describing interactions and/or dependencies between two or more services or between two or more sessions. The sessions may be performed simultaneously or one after the other.

The service references in the skeleton may relate to various aspects. According to a first variant, the service references include an abstract description of one or more candidate services. According to a second variant, that may be combined with the first variant, the service references include a direct reference to one or more candidate services. In the latter case, the service reference may include a service list.

The service pattern defined by the skeleton may include service pattern elements of different kinds. According to a first example, the service pattern includes a plurality of service placeholders (or service templates), wherein each service placeholder includes a service reference to one or more candidate services.

According to a second example, the service pattern elements include one or more conditional elements. Each conditional element may constitute a branching point in the service pattern and specify a branching condition (that may be evaluated taking into account the run-time information). In this case, a non-linear service pattern may result. While the service pattern may thus include various branches, the execution workflow of the constituting services will generally be a linear sequence of constituting services (that may, however, include one or more loops as necessary).

According to a third example, the service pattern includes specific start and end elements. A start element may contain at least one of information allowing a referencing of the skeleton and information describing conditions under which the skeleton should be used. An end element may include a reference to one or more logically following skeletons so that a skeleton workflow may be defined.

In one variation, the determination performed in the analysing step may comprise the sub-steps of determining, from a specific service reference in the service pattern, a set (or list) of candidate services; evaluating one or more constraints associated with each candidate service of the set; and selecting a service from those candidate services of the set that do not infringe any constraint. The constraints may relate to values of static or run-time variables.

The transmission of the first command may be performed once the constituting services (and the resulting execution workflow) have been fully determined. In such a scenario, the skeleton may in a first step be analysed completely to fully determine the structure of the composite service. All the individual constituting services thus determined may then in a next step be placed on an execution platform (e.g. in a SIP container) before being sequentially executed in a third step.

In an alternative scenario, the analysis step and the transmission step are performed in an alternating manner, for example such that one or more of the next constituting services are determined only after at least one previous constituting service has been executed or at least triggered. In such a scenario, the execution of a constituting service may be started before the skeleton has been completely analysed. This scenario adds a further degree of dynamic behaviour to the overall process because the structure of the execution workflow and the selection of the constituting services may become dependent from the result of an executed previous constituting service or other run-time information.

According to a further aspect, a method for enabling the creation and/or modification of composite service skeletons in a telecommunication network is provided, wherein the composite services relate to at least one telecommunication session for a user of the telecommunication network. The method comprises the step of providing a user interface adapted to create and/or modify a skeleton of a composite service, the skeleton specifying a service pattern logically linking a plurality of service references and including information that allows analysing the skeleton during run-time to determine constituting services that form the composite service on the one hand and an execution workflow for the constituting services on the other hand.

According to a further aspect, that may be combined with the aspects discussed above, a method of triggering the execution of composite services in a telecommunication network is provided, the method comprising the steps of receiving a trigger event requesting an execution of at least a portion of a composite service relating to at least one telecommunication session for a user of the telecommunication network; retrieving a skeleton of the requested composite service, the skeleton specifying a service pattern logically linking a plurality of service references; analysing the skeleton during run-time to determine constituting services that form the composite service as well as an execution workflow for the constituting services; and triggering execution of the determined constituting services in accordance with the determined execution workflow.

The invention may be embodied as hardware, as software or as a hardware/software combination. As regards a software implementation, a computer program product is provided which comprises program code portions for performing the steps of the methods disclosed herein when the computer program product is run on one or more computing devices of a computer system. The computer program product may be stored on a computer-readable recording medium.

According to a first hardware aspect, a device for controlling a service composition process for a composite service involving at least one telecommunication session for a user of telecommunication network is provided. The device is adapted to be deployed on a service execution platform within an application layer and comprises: a first interface adapted to receive, from a session control layer, a message relating to a new or an existing telecommunications session; a messaging component adapted to contact a service compositor with respect to a composite service involving the telecommunications session to which the message pertains; a second interface adapted to receive, from the service compositor, a first command; a processor adapted to initiate execution of the first command; a determination component adapted to determine run-time information that becomes available in context with execution of the first command; and a third interface adapted to transmit the run-time information to the service compositor.

According to another hardware aspect, a device for controlling a service composition process for a composite service involving at least one telecommunication session for a user of a telecommunication network is provided. The device comprises a first interface adapted to receive, from a service execution component, a notification relating to a composite service involving at least one telecommunication session; an analysing component adapted to analyse, during run-time, a skeleton specifying a service pattern for the composite service to determine at least one first action to be performed by the service execution component; a second interface adapted to transmit, to the service execution component, a first command relating to the at least one first action; and a third interface adapted to receive, from the service execution component, run-time information that becomes available in context with execution of the first command.

As for a still further hardware aspect, a device for triggering execution of composite services in a telecommunication network is provided. The device comprises an interface adapted to receive a trigger event requesting an execution of a composite service relating to at least one telecommunication session for a user of the telecommunication network; a repository including a skeleton of the requested composite service, the skeleton specifying a service pattern logically linking a plurality of service references; an analyser adapted to analyse the skeleton during run-time to determine constituting services that form the composite service and to further determine an execution workflow for the constituting services; and a triggering component adapted to trigger execution of the determined constituting services in accordance with the determined execution workflow.

A further hardware aspect relates to a network system comprising a service compositor on the one hand and a service execution component on the other hand. The service execution component is adapted to be called from the service compositor and to execute in accordance with the determined execution workflow the constituting services that build the composite service. The service compositor and the service execution component may both be deployed on an IMS application (or service) layer. In such an implementation, the trigger event may comprise the receipt of a SIP message (e.g. by the service execution component), and initiating execution of the constituting services may comprise initiating the placement of one or more (or all) constituting services in a SIP container.

According to a further hardware aspect, a device for enabling the creation and/or modification of composite service skeletons in a telecommunication network is provided, wherein the composite service relates to at least one telecommunication session for a user of the telecommunication network. The device comprises a user interface adapted to create and/or modify a skeleton of a composite service, the skeleton specifying a service pattern logically linking a plurality of service references and including information that allows an analyser to analyse the skeleton during run-time to determine constituting services that form the composite service and an execution workflow for the constituting services. The user interface may be implemented in the form of a graphical user interface (GUI).

**Brief Description of the Drawings**

In the following, the invention will be described with reference to exemplary embodiments illustrated in the drawings, wherein:

Fig. 1              is a schematic diagram of a servlet chaining procedure according to the prior art;

Fig. 2              is another diagram of a servlet chaining procedure according to the prior art;

Fig. 3A             is a schematic diagram of two device embodiments;

Fig. 3B             is a schematic diagram of three further device embodiments;

Figs. 4A to C       are schematic flowcharts illustrating three method embodiments;

Fig. 5              is a schematic diagram illustrating the flow path of a call for which a composite service in accordance with an embodiment is provided;

Figs. 6A and B      are two schematic diagrams illustrating several components according to further device embodiments;

Fig. 7A             is a schematic flowchart illustrating a further method embodiment;

Fig. 7B             is a schematic flowchart illustrating another method embodiment;

Fig. 8              is a schematic diagram illustrating the relationship of global and local constraints;

Fig. 9              is a schematic diagram illustrating a graph for a skeleton embodiment of the present invention;

Figs. 10 and 11     schematically illustrate start and end elements for a skeleton;

Figs. 12 to 14      are schematic diagrams illustrating condition elements for a skeleton;

Fig. 15             schematically illustrates a first graph embodiment for a skeleton;

Fig. 16                    schematically illustrates a second graph embodiment for a skeleton;

Fig. 17                    schematically illustrates a third graph embodiment for a skeleton;

Fig. 18                    schematically illustrates a fourth graph embodiment for a skeleton;

Fig. 19                    schematically illustrates a fifth graph embodiment for a skeleton;

Figs. 20A and 20B     illustrate various run-time variables that may be utilized in con text with the present invention;

Fig. 21A                  illustrates the skeletons associated with two concurrent telecommunication sessions for the same user;

Fig. 21B                  illustrates a skeleton associated with the evaluation of run-time information; and

Fig. 22                    illustrates an embodiment of a graphical user interface (GUI) for enabling the creation and modification of composite service skeletons in a telecommunication network.

## Detailed Description of Preferred Embodiments

In the following description, for purposes of explanation and not limitation, specific details are set forth, such as particular single formats, messaging protocols, etc. In order to provide a thorough understanding of the current invention. It will be apparent to one skilled in the art that the current invention may be practised in other embodiments that depart from these specific details. For example, the skilled artisan will appreciate that the current invention may be practised in connection with service networks not compliant with the IMS and SIP standards discussed below to illustrate the present invention.

Moreover, those skilled in the art will also appreciate that the functions explained herein below may be implemented using individual hardware circuitry, using software functioning in conjunction with a programmed microprocessor or general purpose computer, using an Application Specific Integrated Circuit (ASIC) and/or using one or more Digital Signal Processors (DSP). It will also be appreciated that the present invention may be embodied in a system comprising a computer processor and a memory coupled to the processor, wherein the memory is encoded with one or more programs that may perform the steps disclosed herein.

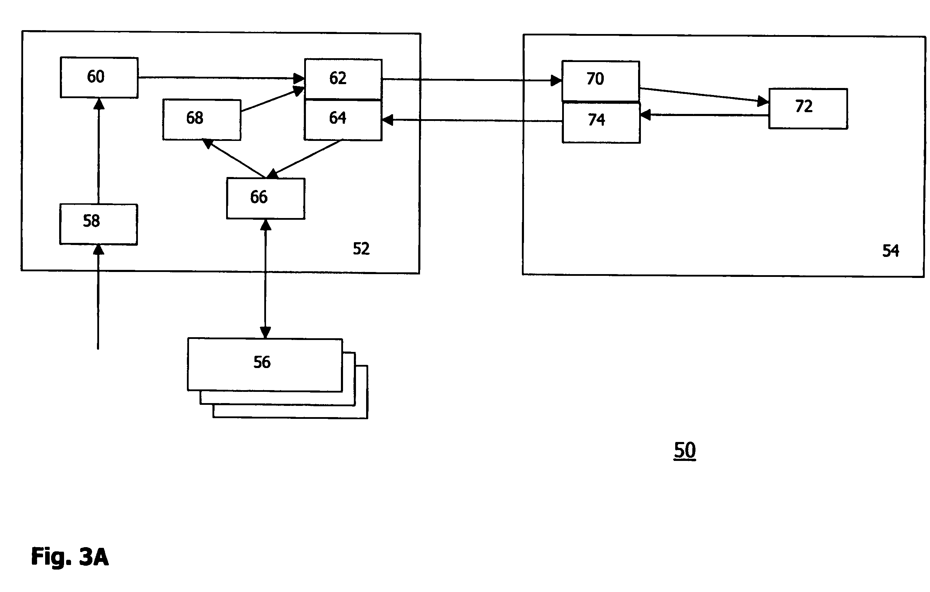

Fig. 3A shows an embodiment of a telecommunication network system 50. The network system 50 comprises a service execution component 52, a service compositor 54 and a plurality of executable services 56.

As shown in Fig. 3A, the service execution component 52, which is deployed on a service execution platform within an application layer (not illustrated), comprises a first interface 58 adapted to receive a message relating to a new or an existing telecommunication session. This message is received from a session control layer not shown in Fig. 3A. The service execution component 52 further comprises a messaging component 60 adapted to contact (via a second interface 62) the service compositor 54 with respect to a composite service involving the telecommunication session to which the received message pertains. A third interface 64 of the service execution component 52 is adapted to receive a first command from the service compositor 54.

As shown in Fig. 3A, the service execution component 52 further comprises a processor 66 and a determination component 68. The processor 66 is adapted to initiate execution of the first command. The first command may relate to an execution of one or more services 56 on the service execution platform on which the service execution component 52 is deployed.

In context with execution of the first command, the determination component 68 determines run-time information such as an execution result of the one or more services 56 or any other run-time events on the service execution platform. The run-time information thus determined is then sent via the second interface 62 to the service compositor 54.

As shown in Fig. 3A, the service compositor 54, which is deployed on the service execution platform or any other platform within the application layer, comprises a first interface 70 adapted to receive from the service execution component 52 a notification relating to a composite service involving at least one telecommunication session. This notification may be a request to start or continue a service composition process or any other message.

An analysing component 72 of the service compositor 54 is triggered by receipt of the notification via the first interface 70 and analyses, during run-time, a skeleton specifying a service pattern for the composite service to determine at least one action to be performed by the service execution component 52. The analysing component 72 is further adapted to generate a command relating to the at least one action and to transmit this command, via a second interface 74, to the service execution component 52. The first interface 70 or a third interface not shown in Fig. 3A is adapted to receive, from the service execution component 52, run-time information that becomes available in context with execution of the command. The run-time information thus received may then be analysed by the analysing component 72.

It should be noted that the pair of interfaces 62, 64 of the service execution component 52 and the pair of interfaces 70, 76 of the service compositor 54 can be combined into a single interface each as needed.

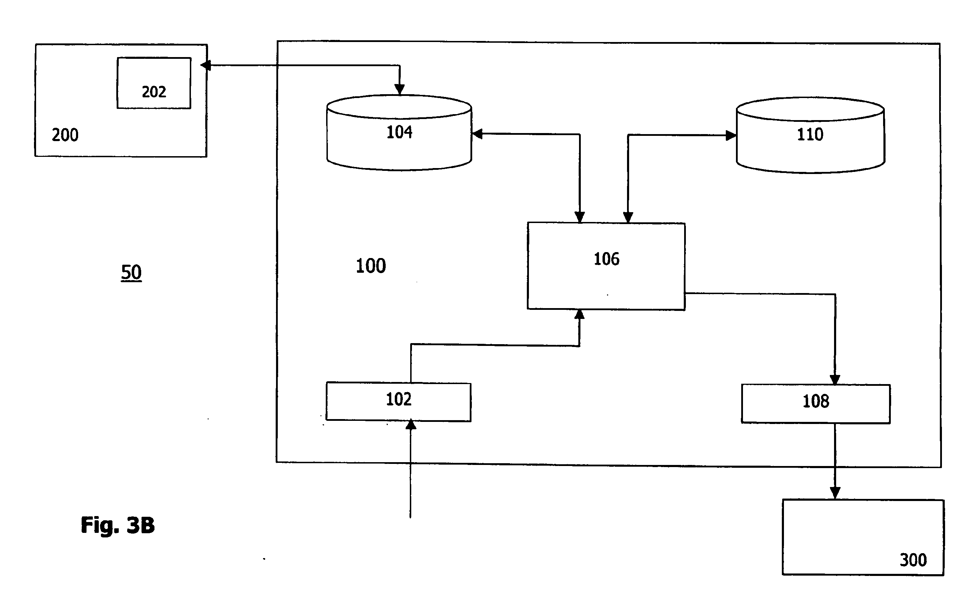

Fig. 3B shows a further embodiment of the telecommunication network system 50. The network system 90 comprises as core component a service compositor 100 for composing and triggering the execution of composite services. The service compositor 100 of Fig. 3B may be the same or a similar device as the service compositor 52 of Fig. 3A.

The network system 50 further comprises a device 200 for enabling the creation (definition) and/or modification of composite service skeletons as well as a service execution platform 300 for executing composite services. The service execution platform 300 of Fig. 3B may include the service execution device 52 shown in Fig. 3A.

The service compositor 100 comprises an interface 102 that is adapted to receive a trigger event requesting an execution of a specific composite service. The composite service relates to at least one telecommunication session for a user (not shown) of the telecommunication network system 50. The trigger event may be constituted by any message initiated by a user device or any other component including the service execution component 52 of Fig. 3A (in this case the interface 102 could be identical to the interference 70 of Fig. 3B).

The service compositor 100 further comprises a repository 104 including at least a skeleton of the requested composite service. An analyser 106 of the service compositor 100 is adapted to analyse the skeleton during run-time. The analyser 106 could be configured as a parser or in any other manner.

The skeleton stored in the repository 104 specifies a service pattern logically linking a plurality of references to candidate services. In principle, more than one skeleton may be stored in the repository 104. In the case that the repository 104 includes a plurality of skeletons, each skeleton may be provided with an identifier that allows the analyser 106 to identify and retrieve the appropriate skeleton.

By analysing the skeleton, the analyser 106 determines (based on the service pattern and the service references included in the skeleton) the constituting services that are to form the requested composite service. Additionally, the analyser 106 determines an execution workflow for the constituting services. In some cases, the process of determining the constituting services and the process of determining the execution workflow are no separate steps but are performed simultaneously. For example, by repeatedly determining the next constituting service the execution workflow (typically the execution sequence of the constituting services) may be determined automatically.

The service compositor 100 further includes a triggering component 108. The triggering component 108 is adapted to trigger execution of the constituting services determined by the analyser 106 in accordance with the execution workflow that has also been determined by the analyser 106. The execution of the individual constituting services that form the composite service may either be performed on the device 100 itself or, as illustrated in Fig. 3B, on the service execution platform 300. In the latter case, the triggering component 108 is configured to communicate with the service execution platform 300 for triggering execution of the requested composite service (or portions thereof) based on the constituting services and the execution workflow determined by the analyser 106. Execution of the composite service (or of portions thereof) can be triggered by sending a corresponding command via the interface 108 to the service execution platform 300 as explained in context with Fig. 3A.

The service compositor 100 may further comprise a database 110 including service descriptions for a plurality of services that have the potential of being selected as constituting services. The service references specified in the skeleton may thus refer to service descriptions stored in the database 110. By comparing the service references in the skeleton with the service descriptions of services stored in the database 110, the analyser 106 may determine one or more candidate services for each specific service reference. In the case two or more candidate services are determined for a specific service reference, a further selection process is required to finally determine the single candidate service that is to form a specific constituting service of the composite service.

The device 200 for creating/modifying composite service skeletons comprises a user interface 202 adapted to create (i.e. define) and/or modify the at least one composite service skeleton stored in the repository 104. The user interface 202 may be realised in the form of a GUI with drag-and-drop functionalities. Preferably, the device 200 allows for a modification of service skeletons during run-time and thus allows for a display and modification of run-time information (such as run-time signalling messages, the structure of the next service to be executed, etc.).

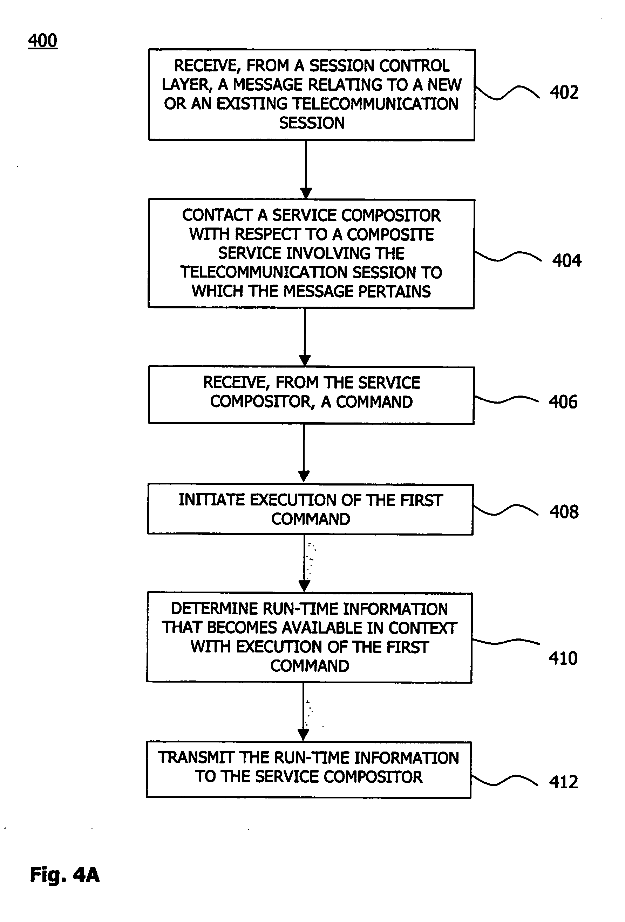

Fig. 4A shows a flowchart 400 of a method embodiment of the present invention. This method embodiment may be practised using the service execution component 52 of Fig. 3A or any other device.

The method starts in step 402 with receiving a message from a session control layer (e.g. from a S-CSCF). The message (such as SIP message) may relate to a new or an existing (ongoing) telecommunication session for a new or an existing service composition process.

In a next step 404, a service compositor is contacted with respect to a composite service involving the telecommunication session to which the message pertains. To this end, a notification including, for example, a reference to the message received from the session control layer and/or to a specific composite service composition process may be sent to the service compositor. The telecommunication session may, for example, be a telephone session, a video session, a conferencing session, or a multimedia session. The requested composite service may be performed during the setup of a telecommunication session, while the session is ongoing, or in context with terminating the session. Moreover, the requested composite service may itself include the setup, invocation or termination of one or more telecommunication sessions.

Then, a command is received from the service compositor in step 406 and executed in step 408. In step 410, run-time information that becomes available in context with execution of the command is determined and transmitted, in step 412, to the service compositor for further evaluation.

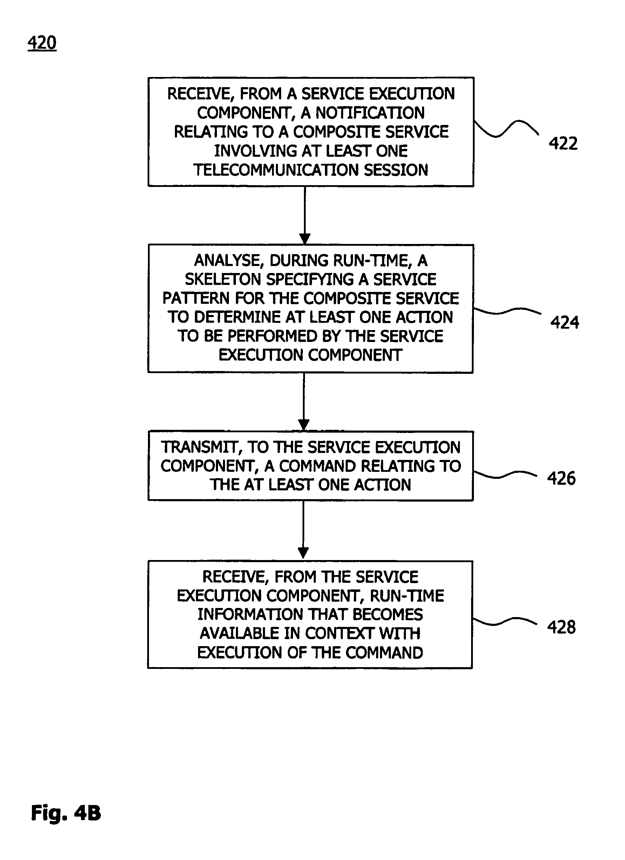

Fig. 4B shows a flowchart 420 of a further method embodiment of the present invention. This method embodiment may be practised using the service compositors 54, 100 of Fig. 3A and 3B or any other device.

The method starts in step 422 with receiving, from a service execution component, a notification relating to a composite service involving at least one telecommunication session. In a next step 424, a skeleton specifying a service pattern for the composite service is analysed during run-time to determine at least one action to be performed by the service execution component. This action may be the execution of one or more constituting services of the composite service. However, the action could also be a manipulation, generation and/or transmission of a session-related message towards the session control layer, the definition and/or manipulation of variables on the service execution platform, the deletion or removal of one or more constituting services on the service execution platform, or the execution of service execution platform specific instructions.

Then, a command relating to the action is sent in step 426 to the service execution component. In response to the transmission of the command in step 426, run-time information is received from the service execution component in step 428. This run-time information is constituted by information that has become available in context with execution of the command. For example, the run-time information may pertain to a result of the execution of the command or any other event that has occurred upon executing the command.

In a further step not shown in Fig. 4B, the run-time information may be analysed and one or more further commands may then be transmitted to the service execution component depending on the analysis.

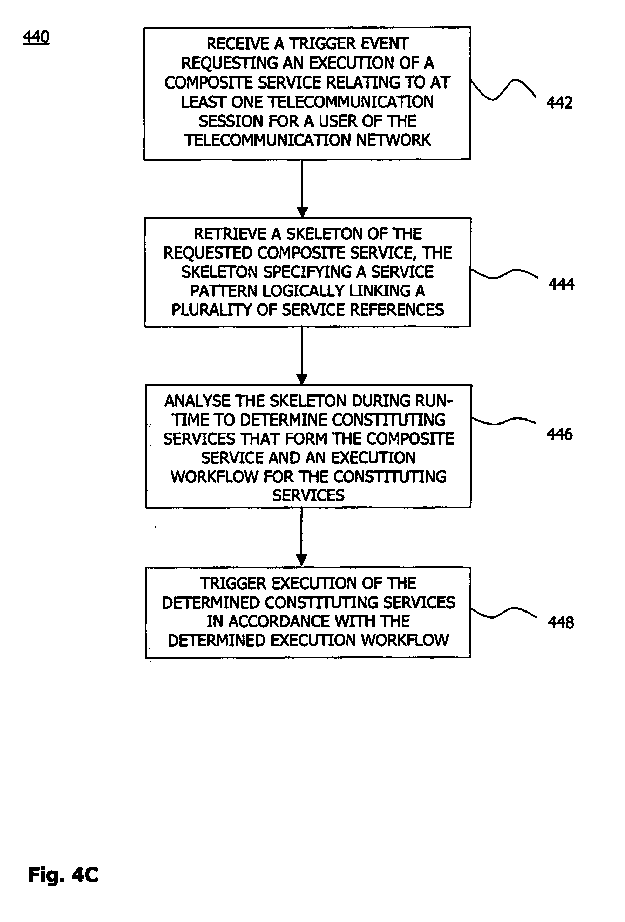

Fig. 4C shows a flowchart 440 of another method embodiment of the present invention. This method embodiment may be practised using the service compositors 54, 100 of Figs. 3A and 3B or any other component.

The method starts in step 442 with receiving a trigger event requesting an execution of a composite service. The composite service relates to at least one telecommunication session for a user of a telecommunication network. The telecommunication session may, for example, be a telephone session, a video session, a conferencing session, or a multimedia session. The requested composite service may be performed during the setup of a telecommunication session, while the session is ongoing, or in context with terminating the session. Moreover, the requested composite service may itself include the setup, invocation or termination of one or more telecommunication sessions.

In response to receipt of the trigger event in step 442, a skeleton of the requested composite service is retrieved in step 444. The skeleton retrieved in step 444 specifies a service pattern that logically links a plurality of service references. The service references may comprise abstract service descriptions and/or explicit references to one or more specific services.

In a next step 446, the skeleton retrieved in step 442 is analysed (e.g. parsed) during run-time. In the context of the present embodiment, the term "run-time" denotes a period of time that typically starts with generation (or with receipt) of the trigger event or a period of time spanned by the composite service composition and execution process. In step 446, the skeleton is analysed to determine one or more constituting services that are to form the composite service. Additionally, an execution workflow for the constituting services is obtained during the analysis process.

In step 448, execution of at least a first portion of the constituting services determined in step 446 is triggered in accordance with the execution workflow also determined in step 446. It should be noted here that steps 446 and 448 could be performed in various ways. According to first variant, the skeleton is completely analysed to determine all constituting services and the overall workflow for the constituting services. Once the analysis of the skeleton has been completed, the composite service is executed in accordance with step 448.

According to a second variant, steps 446 and 448 are performed in an alternating manner. In this regard, the execution of one or more first constituting service is triggered in accordance with step 448 as soon as the analysis step 446 has yielded at least one first constituting service. After execution of the at least one first constituting service has at least been triggered, the analysis step 446 is (synchronously or asynchronously) resumed to determine one or more second constituting services of the requested composite service. In this context, the run-time information as discussed above in context with Figs. 4A and 4B may be taken into account.

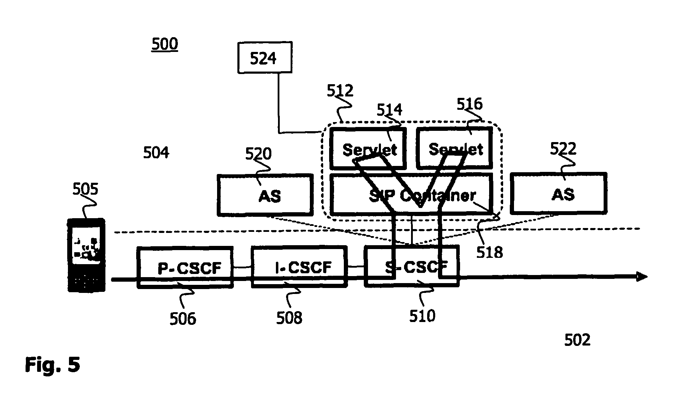

Further embodiments of the present invention will now be described with specific reference to an exemplary IMS network architecture. In this regard, reference is made to Fig. 5. Fig. 5 shows an IMS network 500 including a session control layer 502 and a service or application layer 504 (the network connectivity layer has been omitted in Fig. 5). The IMS network 500 may be an implementation of any of the more abstract network systems 50 shown in Figs. 3A and 3B.

On the session control layer 502 shown in Fig. 5, a Proxy CSCF (P-CSCF) 506, an Interrogating CSCF (I-CSCF) 508 as well as a S-CSCF 510 are provided. The P-CSCF 506 is a SIP proxy server which routes SIP request and response messages of a user terminal 505 to the appropriate I-CSCF 508. The P-CSCF 506 provides further functionalities in relation to the generation of billing information, the verification of the SIP messages, etc. The I-CSCF 508 queries the HSS (not shown in Fig. 5) to obtain the address of the appropriate S-CSCF 510 to which a specific SIP message must be forwarded.

On the application layer 504, the IMS network 500 includes various AS 512, 520, 522. As shown for the AS 512 in more detail, each AS 512, 520, 522 may host various servlets 512, 516 that may be chained in a SIP container 518 of the respective AS 512, 520, 522.

In the following, it is assumed that a composite service is provided to an individual call originating from the user terminal 505. An initial SIP message underlying the call is routed from the user terminal 505 via the P-CSCF 506 and the I-CSCF 508 to the S-CSCF 510. When the SIP message is received at the S-CSCF 510, the S-CSCF 510 looks up the IFC applicable to this call in the HSS (not shown). In the present case, the IFC indicates that a certain composite service has to be provided to the call originating from the user terminal 505 before forwarding this call towards a terminating node. In a next step the S-CSCF 510 triggers the composition and execution of the required composite service from the AS 512 as will be described below in more detail.

In the present case, it will be assumed that the composite service will be provided utilising SIP servlet chaining (although other possibilities such as the "chaining" of SIP applications exist also). The chaining of the SIP servlets is not controlled in a conventional manner based on static IFC stored in the HSS, but rather (on the application layer 504) by a novel component, the so-called Multi-Service Composition Engine (MSCE) 524, which may be an implementation of the service compositors 54, 100 of Figs. 3A and 3B. In the implementation of the present embodiment, the MSCE 524 uses the SIP container 518 to implement a dynamic chaining of various SIP servlets 514, 516 based on a skeleton that has been previously generated for the requested composite service. Additional AS 520, 522 (with additional SIP applications) or SIP servlets hosted on other containers could be chained in via the SIP-based ISC.

Fig. 6A illustrates in more detail an exemplary configuration of the application layer 600 of an IMS network 500 as generally shown in Fig. 5. With respect to the composition and the triggering of execution of composite services, the MSCE 602 is the core component on the application layer 600. The MSCE 602 implements the composition of a requested composite service by first determining a skeleton structurally defining the composite service, and then identifying appropriate constituting services based on information included in the skeleton and, if required, further static and/or run-time information. The identification of appropriate constituting services is based on service references included in the skeleton to identify a specific constituting service (e.g. a SIP servlet) to be included into the composite service. This process will in the following be referred to as instantiation or invocation of the composite service.

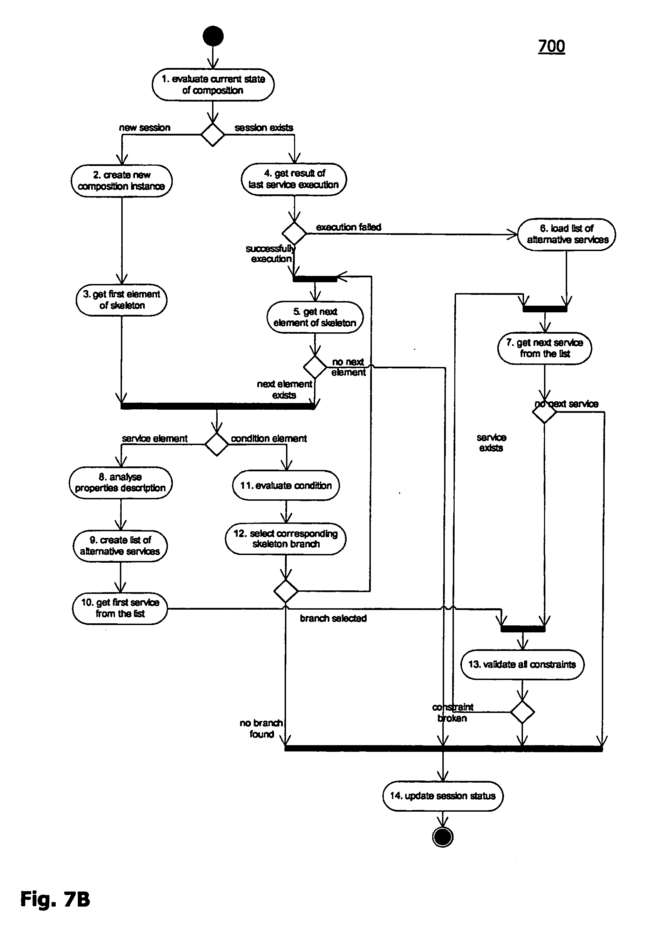

In order to prevent resource usage collision between constituting services in a composite service, as well as multiple composite services executed on behalf of one and the same user, the MSCE 602 will ensure that all existing composite services run by the user do not violate any constraints. To this end, all related constraints will be evaluated before a new composite service is suggested for execution. This approach will be described in more detail later on with respect to Fig. 7B.

Referring to Fig. 6A, the operation of the MSCE 602 starts with receipt of a SIP message from the S-CSCF (not shown) by an application server 603, which triggers the MSCE 602. The triggering message typically includes a reference to the requested composite service (if available) as well as additional state information relating, for example, to an ongoing telecommunication session. When triggered the MSCE 602 evaluates the current state of the composition and execution of the requested composite service. In this regard, the MSCE 602 identifies the current state of the requested composite service and "loose ends" suitable for extending the composite service. Such "loose ends" may be constituted by SIP sessions that have not yet been terminated as well as by references to new service chains (e.g. references to additional skeletons).

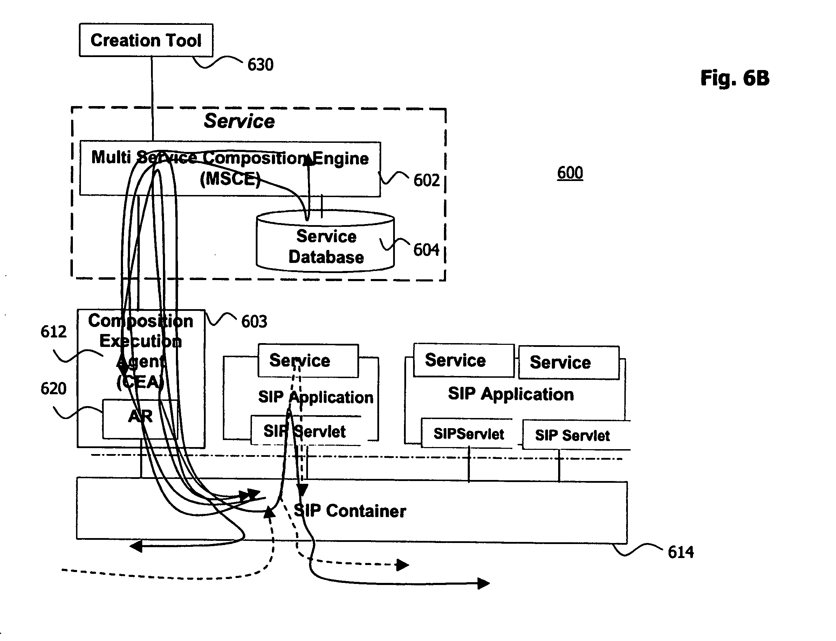

In a further step, the MSCE 602 evaluates all constraints applicable to the current step of the service composition in order to narrow down the amount of compatible candidate services. To this end, the MSCE 602 analyses the applicable skeleton (which could be fixedly assigned to the MSCE 602 or which could be determined by the MSCE 602 in any way) and the related service descriptions that may be retrieved from a service database 604. In most cases, a composition-wide evaluation of the constraints will be necessary to cover feature interactions across several SIP or other sessions. Thus, the MSCE 602 determines the individual constituting services to be included in the composite service. A constituting service may, for example, be a SIP servlet or SIP application, a conventional webservice (WS) 608, a WS Business Process Execution Language (BPEL) service 606 or an Enterprise Java Bean (EJB) service 610. As shown in Fig. 6, the applicable communication protocols include the Remote Interface (RMI) as well as the Simple Object Access Protocol (SOAP).

Once one or more (or all) services constituting the composite service have been determined, the corresponding information ("composite service description") may be transmitted to a Composition Execution Agent (CEA) 612. In the embodiment shown in Fig. 6A, the CEA 612 is deployed on a service execution platform (e.g. in a SIP servlet container 614 of the SIP AS 603) and is responsible for executing all the constituting services (that may be available locally or remotely) according to the composite service description created by the MSCE 602. The composite service description specifies at least some of the constituting services that form the composite service as well as the execution workflow for the constituting services as previously determined by the MSCE 602.

In order to manipulate individual telecommunication sessions, the CEA 612 controls every session that is involved in a composite service (e.g. all SIP sessions processed by the AS 603). To this end, the CEA 612 controls the dispatching for a given session (e.g. the CEA 612 may be activated as the first entity on the SIP dispatching path of the session and may take over SIP dispatching control). The CEA 612 is capable of intercepting and influencing any session-related requests as well as responses and subsequent requests. In the case of SIP, the CEA 612 is further able to manipulate individual SIP packets on behalf of the MSC 602 (based on corresponding commands received from the MSC 602).

Execution of a composite service under control of the MSC 602 may span multiple SIP sessions or sessions established using other technologies (such as WS and EJB). Consequently, there can be a 1: n (n ≥ 1) relationship between an individual composite service (or service composition process) on the one hand and multiple technology specific sessions on the other hand. Since the CEA 612 may currently be involved in several composite services, a mapping between each composite service composition process on the one hand and the individual sessions involved in each individual service composition process is maintained by the CEA 612. To this end, associations between service composition identifiers and session identifiers may be established as will be described in more detail further below.

Fig. 6B illustrates an alternative configuration of the application layer 600 of an IMS network 500 as generally shown in Fig. 5. Similar components will be designated with the same reference numerals as in Fig. 6A.

The configuration shown in Fig. 6B is based on a JSR 289 scenario according to which the SIP application composition control is moved outside the SIP container 614. The CEA 612 incorporates application router (AR) functionalities as known from JSR 289. However, the CEA 612 is more than a conventional AR as it constitutes an individual SIP application capable of communicating with the MSCE 602 and of generating SIP requests (here under control of the MSCE 602). Thus, the MSCE 602 is capable of controlling initial SIP requests and can also receive, from the CEA 612, run-time information relating to responses and subsequent events (such as signalling) occurring in the service execution environment. Based on this run-time information, the MSCE 602 may trigger the execution of one or more further commands or services. The repeated messaging between the MSCE 602 and the CEA 612 in context with the composition of an individual composite service is illustrated by a loop of arrows in Fig. 6B. Also shown in Fig. 6B is a skeleton creation tool 630 that is equivalent to the device 200 in Fig. 3B.

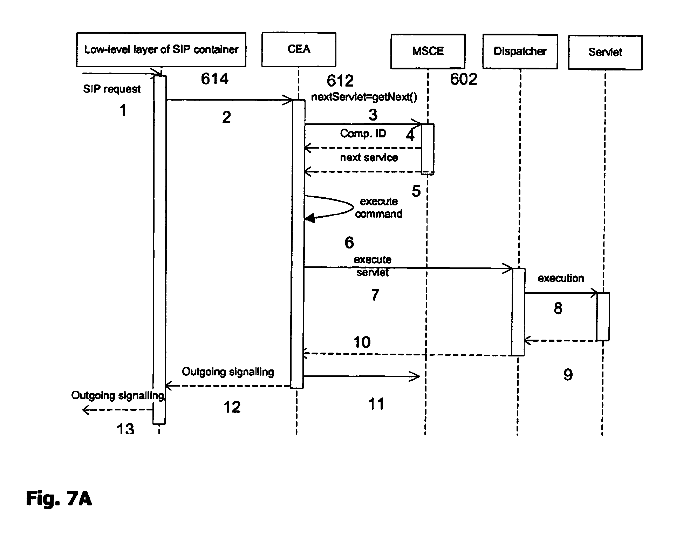

An exemplary mode of operation of the CEA 612 shown in Figs. 6A and 6B and the corresponding communication between, inter alia, the CEA 612 and the MSCE 602 will now be described in more detail for an initial SIP request on the one hand and for subsequent SIP signalling (after the initial SIP request) on the other hand. The handling of initial SIP requests will be described with reference to Fig. 7A first.

Referring to Fig. 7A, controlling of a service composition process starts with receipt of a SIP request message by the SIP AS 603 of Figs. 6A and 6B in step 1. The SIP request message is typically received from the S-CSCF (not shown) on a low-level layer of the respective SIP container 614 of the SIP AS 603.

If it is determined that the SIP request message relates to a conventional (non-composite) SIP service, the SIP service is invoked by the corresponding SIP dispatcher without involving the MSCE 602. If, on the other hand, it is determined that the SIP request message relates to a telecommunication session relating to a new or an ongoing service composition process, the CEA 612 is invoked for the SIP session underlying the SIP request message (step 2 in Fig. 7A). Once invoked, the CEA 612 takes over SIP request dispatching from this point in time.

In a third step, the CEA 612 contacts and invokes the MSCE 602. In this context, the CEA transmits a notification message to the MSCE 602 that includes information on the current SIP request message, any events in the execution environment the MSCE 602 should be aware of, as well as a service composition identifier (if available) relating to the composite service involving the specific session to which the SIP request message received in step 1 pertains. Since the scenario shown in Fig. 7A relates to an initial SIP request, a service composition identifier will typically not be available and has to be obtained from the MSCE 602 for use later on (e.g. for processing subsequent signalling by the CEA 612).

Assuming that no service composition identifier has been sent by the CEA 612 to the MSCE 602 in step 3, the MSCE 602 provides in step 4 a service composition identifier to the CEA 612 to be associated with the SIP session underlying the SIP request message received in step 1. The service composition identifier provided in step 4 to the CEA 612 will be a newly generated service composition identifier if no other related service composition process is currently controlled by the MSCE 602. On the other hand, if the MSCE is aware of a related service composition process, the MSCE 602 will return to the CEA 612 the (previously generated) service composition identifier of this related service composition process.

Upon receipt of the service composition identifier in step 4, the CEA 612 updates a local mapping table that associates the specific service composition process (i.e., the specific service composition identifier) with one or more SIP (or other) sessions (i.e. session identifiers) involved in this specific service composition process. In other words, multiple SIP and other sessions may relate to one and the same service composition process.

In a next step 5, the MSCE 602 informs the CEA 612 about a specific command that is to be executed by the CEA 612 in step 6. The command may be determined by the MSCE 602 by analysing a skeleton specifying a service pattern for the composite service that is to be composed.

The command received in step 5 from the MSCE 602 may have various contents. According to a first example, the MSCE 602 returns in step 5 an execution platform specific (e.g. SIP specific) command. This command may, for example, relate to the definition and/or manipulation of variables in the execution environment, the manipulation, generation and/or transmission of one or more session-related messages towards the session control layer (see steps 12 and 13), the execution layer of service execution platform specific instructions, and so on. According to another example, the MSCE 602 indicates via the command sent in step 5 that service composition is complete (which will typically not be the case when handling an initial request but which may be the case in subsequent signalling). In this case, the CEA 612 considers the execution of the composite service as done and lets the SIP request leave the application server (as indicated in Fig. 6B).

According to a third example, that is also illustrated in Fig. 7A, the MSCE 602 returns a reference to one or more services (e.g. SIP servlets) that are to be executed. In such a case, the CEA 612 enforces the execution of these one or more services according to the specific approach appropriate to the respective service execution platform (for example by proxying or dispatching a SIP request message to each service corresponding to the reference received from the MSCE 602 (steps 7 to 11 in Fig. 7A).

After each attempt to execute one or more commands, control returns to the CEA 612, and the CEA 612 determines run-time information that becomes available in context with execution of the one or more commands received in step 5. This run-time information is then sent to the MSCE 602 in step 11. The run-time information transmitted to the MSCE 602 typically relates to the result of the execution of the service (steps 7 to 11) and/or to signalling (e.g. a SIP INVITE message) received by the execution environment. The run-time information may then be used by the MSCE 602 to decide the next action that is to be performed in the service composition process.

After the transmission of the run-time information in step 11, control is still with the CEA 612 and the CEA 612 continues with step 3 to query the MSCE 602 about further commands that have to be executed. The further commands may be generated by the MSCE 602 taking into account the run-time information received in step 11. Alternatively, if the CEA 612 determines that there are still further commands (or services) that have to be executed, the CEA 612 loops back to step 6. By transmitting a sequence of two or more commands to the CEA in step 5, the CEA 612 does not have to consult the MSCE 602 after execution of each individual command.

As mentioned above, the CEA 612 is not only invoked upon receipt of an initial SIP request message, but also on all subsequent requests and responses occurring during an ongoing SIP or other session belonging to a service composition process.

Repeatedly consulting the CEA 612 is important for implementing non-linear service execution workflows, where different workflow branches may be selected depending on the content of subsequent signalling.

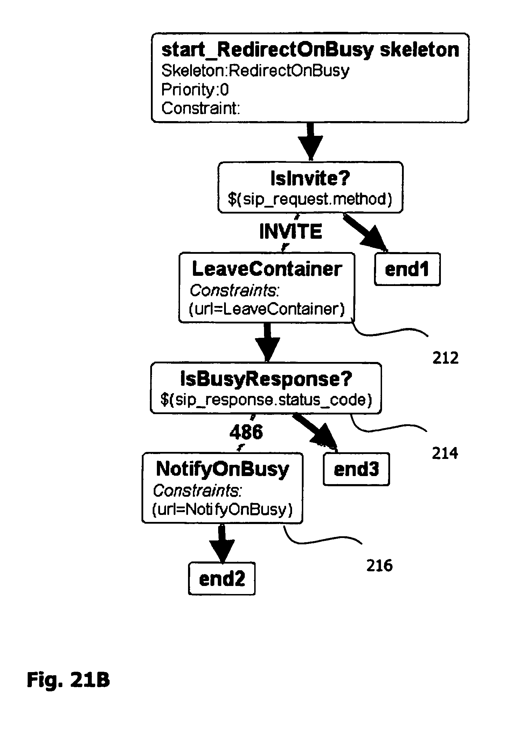

The process discussed above in context with Fig. 7A may thus not only be performed for an initial request message, but also upon receipt of any subsequent request or response message. In other words, upon receipt of any subsequent signalling, the CEA 612 may also contact the MSCE 602 in a similar manner as shown in Fig. 7A to inform the MSCE 602 about the subsequent signalling and to ask for actions to be performed on the SIP container in reaction thereto. The main difference of the handling of subsequent signalling compared to the handling of initial request messages as shown in Fig. 7A is the fact that the CEA 612 can determine a service composition identifier based on the locally maintained mapping table and may readily include the service composition identifier in the message sent to the MSCE 602 in step 3. A specific example for subsequent signalling will be discussed later on with reference to Fig. 21B.

Another mode of operation of the MSCE 602 of Figs. 6A and 6B will now be explained in more detail with reference to the flowchart 700 shown in Fig. 7B. Fig. 7B illustrates the operation of the MSCE 602 in the form of a Unified Modelling Language (UML) diagram. The individual steps shown in Fig. 7B will now be explained in more detail.

Once invoked by a triggering event, the MSCE 602 will first try to identify an existing composite service corresponding to the incoming request (step 1). If no existing composite service can be identified, a new composite service instance will have to be invoked (step 2). For the invocation of a new composite service, the MSCE 602 needs to identify a skeleton associated with the new composite service. In the case that more than one skeleton is required, a meta-skeleton can be defined. As stated above, the skeleton may be fixedly assigned to the MSCE 602 and may be retrieved from a local repository, or the MSCE 602 may determine and retrieve an applicable skeleton from a central skeleton database.

After a new composite service instance has been composed and the applicable skeleton has been retrieved, the MSCE 602 starts with analysing the skeleton and evaluating the first skeleton element (step 3). The evaluation of the skeleton elements serves to distinguish between service elements (including service references) on the one hand and branching instructions (including condition elements) on the other hand. In the case the evaluation yields a service element, a properties description abstractly referencing candidate services is derived from the service element and analysed in step 8. An analysis of the properties description of the service element may result in a list of several candidate services fulfilling the properties description (step 9).

In step 10, the first service from the service list created in step 9 is selected and the constraints associated with the selected service are validated in step 13. Services that violate no constraints are considered further as candidates for inclusion into the composite service. In the case a service included on the list created in step 9 is unavailable (or otherwise undesirable), the MSCE 602 identifies an alternative service from this list (step 7).

If it is determined after step 3 that the skeleton element is a branching instruction specified in a condition element, the condition included in this element is evaluated in step 11 and the appropriate skeleton branch will then be selected in step 12. After the evaluation of a condition element, the MSCE 602 will proceed with the first skeleton element of the selected branch unless the condition element was the final element of the skeleton, or a branch corresponding to the result of the condition cannot be found.

If it is determined in step 1 that a new composition instance has already been created (i.e. that a composition session already exists), the result of the execution of the last constituting service is evaluated in step 4. In this regard, run-time information (e.g. a response time or the availability of candidate services) may be evaluated. If the run-time status of the service is sufficiently positive, the MSCE 602 proceeds with the evaluation of the next element of the skeleton (step 5). Otherwise, a list of alternative services is loaded (step 6) and the process proceeds with obtaining the next service from the list (step 7).

In the following, the creation of skeletons and of skeleton elements (such as service references and conditions) as well as exemplary run-time parameters will be described in more detail. The skeletons and skeleton elements may be used in context with any of the embodiments described above or in any other implementations.

## 1. Service Description

The creation of a composite service based on a skeleton depends on the availability of sufficient information regarding available services and their properties. In the above embodiments, the MSCE therefore needs access to information on the requirements of all services involved, as well as on the functionality they may provide to other services. This service description information may be centrally stored in one or more databases accessible by the composing component such as the MSCE (e.g., in database 110 shown in Fig. 3B).

Since the internal functionality of a service is typically hidden from the MSCE, and since the information that can be extracted from available descriptions according to the Session Description Protocol (SDP) or the Web Services Description Language (WSDL) is not enough for a composition on a functional level, specific additional information about service properties is needed when a composite service is to be created. This information about the properties of an individual service ("service description") is modelled using service attributes (e.g. according to a structural model or a resource model) and service constraints. Service attributes describe what a service provides and service constraints (which may reference or be included in service attributes) describe what a service requires. These two mechanisms will now be discussed in the following sections.

Service Attributes

Service properties may be described, *inter alia,* through a set of service attributes. A service attribute is a pair consisting of an attribute identifier and an attribute value. Attributes of a service can be interpreted in terms of resource-based reasoning as resources or functionality provided by a service. For example, an attribute with identifier "codec" and value "G.711" can be interpreted to mean that the service described by this attribute provides the functionality of a G.771 codec. Each service description should contain at least a unique identifier, e.g. an attribute *srv* that contains a value used to uniquely identify the service. Additionally, service attributes can be also used for describing constraints associated with a service and general service properties such a human-readable description, the Universal Resource Identifier (URI) of a service, etc.

For the textual representation of service attributes, the Lightweight Directory Access Protocol (LDAP) data Interchange Format (LDIF as described in RFC 2849) may be used. LDIF is a widely accepted format for textual data representation and is used by LDAP directories for managing service information.

In the following, two hypothetical examples of service descriptions for a Voice over IP (VoIP) service and a charging service will be illustrated. According to the LDIF syntax, an attribute identifier is separated from its attribute value by a colon ":".

```
srv               : ServiceA
URI               : sip://server.com/voip
service_provider  : ProviderA
function          : audio_transmitting
audio_codec       : GSM
```

(continued)

| | |
|---|---|
| audio_codec | : G.711 |
| description | : This is a VoIP service |

| | |
|---|---|
| srv | : ServiceB |
| URI | : sip://server.com/charging |
| service_provider | : ProviderA |
| function | : charging |
| charging_tariff | : VoIP |
| charging_standard | : CAPv3 |
| description | : This is a charging service for VoIP |

Service attributes can be referenced from service constraints and from skeleton elements as will be described in more detail below. Therefore, it is essential for the skeleton designer to know the attributes a service may contain.
Services may be organised into service classes that describe the set of attributes for each service belonging to the service class. All services within a class have an identical set of possible service attributes. Each specific service of a class may have a different set of values for these attributes. A service can belong to multiple classes and as a result can have all attributes of these classes. Examples for classes could be "VoIP services", "charging services" or "SIP services". The classes may be defined in a schema. The definition of the schema should be fixed, since schema extensions may introduce incompatibilities for existing compositions.
A special service attribute *objectclass* is used for specifying service classes to which a specific service belongs. This attribute thus allows referencing classes of a service from service constraints and skeleton elements. The following is example of a schema with two service classes.

Schema

```
objectclass sip_services {
      URI, function, description
}
objectclass voip_services {
      audio_codec
}
```

The following service is derived from both classes of the schema:

| | |
|---|---|
| srv | : ServiceA |
| objectclass | : sip_services |
| objectclass | : voip_service |
| URI | :sip://server.com/voip |
| service_provider: | : ProviderA |
| function | : audio_transmitting |
| audio_codec | : GSM |
| audio_codec | : G.711 |
| description | : This is a VoIP service |

Service Constraints

Requirements and limitations of a service can be defined through service constraints. Service constraints can be interpreted in terms of resource-based reasoning as resources that are consumed by a service. A service constraint may be implemented as a predicate, in which service attributes, i.e. resources, can be referenced. For the textual representation of service constraints, the LDAP filter format as described in RFC 2254 may be used. The usage of logical operations, mathematical operations, string operations and parentheses maybe allowed in constraints.

The following example illustrates a service constraint describing the requirement of a charging resource with the charging tariff VoIP:

(&(function = charging)(charging_tariff = VoIP))

In this example, *function* and *charging_tariff* are attribute identifiers and *charging* and *VoIP* are required attribute values. This constraint is valid only if a service exists that accommodates these two requested attribute values. For instance the *VoIP* service used in the examples of the previous section "Service Attributes" would fulfil this constraint.

Instead of or in addition to service attributes, run-time variables can also be referenced in constraints. Possible run-time variables will be discussed in more detail later on. The following example contains a constraint that uses a run-time variable to indicate that this particular service cannot be the first component of a composite service:

$$(skeleton.executed\_elements\_count > 1)$$

Constraints may be grouped into global and local constraints. Global constraints must be valid in the context of the whole composite service, i.e. each service in a composite service must fulfil the global constraints. Global constraints are useful for defining restrictions applicable to all constituting services of a composite service (e.g. all constituting services in the composite service must be from the same provider or all constituting services must be SIP services).

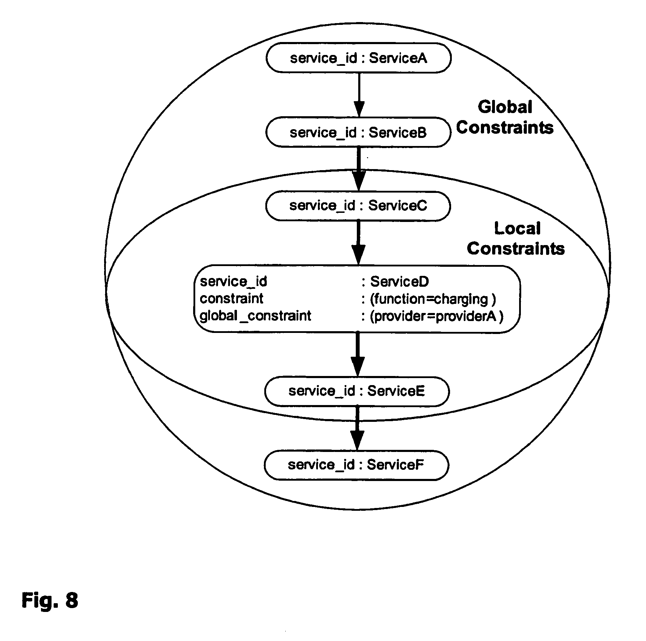

A local constraint is only valid in the context of the neighbouring components of the service, i.e. services connected to the service with the local constraint must fulfil this constraint. It may be defined that it is not necessary that all neighbouring services fulfil the local constraint. In this case it suffices if at least one neighbouring service fulfils it. Consequently, a service describes the services it is compatible with through its local constraints. Fig. 8 illustrates the impact areas of local and global constraints on a composite service.

Constraints are part of the service description and may be defined using special service attributes: a global constraint through service attribute *global_constraint* and a local constraint through a *constraint* service attribute. The following is an example of a VoIP service that requires a charging service from the same provider as VoIP and with the charging tariff VoIP:

```
srv               : ServiceA
objectclass       : sip_services
objectclass       : voip_service
URI               : sip://server.com/voip
service_provider  : ProviderA
function          : audio_transmitting
audio_codec       : GSM
audio_codec       : G.711
description       : This is a VoIP service
constraint        : (&(function=charging)(tariff=VoIP)
                    (provider=providerA))
```

Multiple *global_constraint* attributes in a single service description may be joined with a boolean AND "&" into one global constraint. In contrast, multiple *constraint* service attributes need not be connected and may thus be considered as two independent constraints. It is therefore possible that for a specific service description one local constraint will be satisfied by one service and another local constraint by another service.

The following example illustrates a service requiring that at least one of its neighbouring services should provide the function *charging* for tariff *VoIP* and least one of its neighbouring services should belong to *providerA*. However, these constraints may be fulfilled by two different services.

```
srv               : ServiceA
objectclass       : sip_services
objectclass       : voip_service
URI               : sip:/ /server.com/voip
service_provider  : ProviderA
```

(continued)

| | |
|---|---|
| function | : audio_transmitting |
| audio_codec | : GSM |
| audio_codec | : G.711 |
| description | : This is a VoIP service |
| constraint | : (&(function=charging) (tariff=VoIP)) |
| constraint: | : (provider=providerA) |

The following is an example of a service with a global constraint that forces all services in the composite service to be SIP services offered by providerA.

| | |
|---|---|
| srv | : ServiceA |
| objectclass | : sip_services |
| objectclass | : voip_service |
| URI | :sip://server.com/voip |
| service_provider | : ProviderA |
| function | : audio_transmitting |
| audio_codec | : GSM |
| audio_codec | : G.711 |
| description | : This is a VoIP service |
| constraint | : (&(function=charging)(tariff=VoIP)) |
| global_constraint | : (&(service_class=sip_services) (provider=providerA)) |

## 2. Composite Service Skeleton

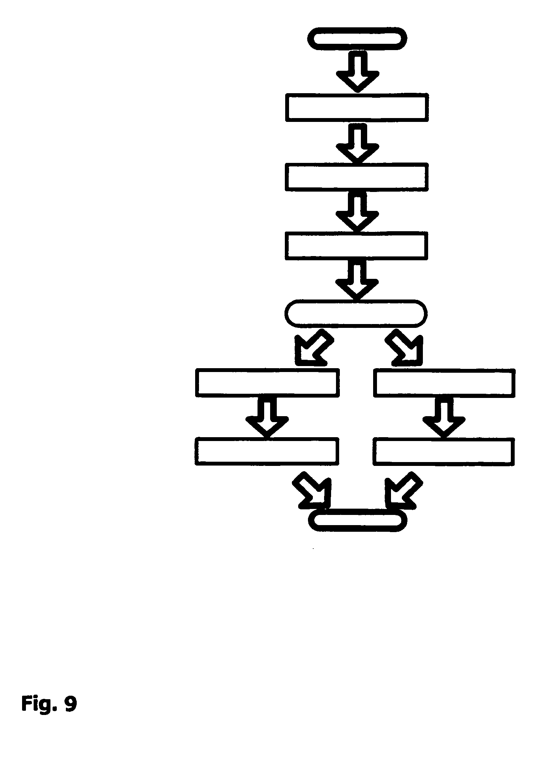

A skeleton is a template for a composite service. Skeletons typically define the candidate services eligible for a composite service and how the actual constituting services may be selected out of the candidate services. As mentioned above, the MSCE uses deployed skeletons as the basis for composing appropriate composite services. The execution of a composite service based on a skeleton will also be named skeleton execution. Graphically, a skeleton can be represented as directed acyclic graph, as schematically shown in Fig. 9. More detailed examples of skeletons will be discussed later on.

A skeleton may define for each composite service at least:

[1] a set of candidate services
[2] a service pattern, i.e. one or more possible workflows in which individual services could be arranged

Skeletons are created either manually by the composite service designer, semiautomatically or in a fully automated manner. A skeleton might be static (and not be changeable by the MSCE or by any services). However, it is allowed to make execution of skeleton elements depending on run-time information, so that skeleton elements will be taken into account during skeleton execution only under certain prerequisite conditions. Furthermore, skeleton elements can be grouped into branches whose execution can also be dependent on run-time information. Examples for possible run-time information are user preferences, skeleton execution status, network status, allocated resources, etc.

Skeletons can contain descriptions of alternative services that can be used as substitutes for an original service (e.g. in cases in which the original service is not available or cannot be successfully executed). Alternative services will be assessed one after the other until one of them is available and/or may be successfully executed.

These mechanisms make the skeleton more adaptable to the run-time context so that once designed, a skeleton can be executed repeatedly for a long period of time and in different contexts. A consequence of the alternative services and the provision of skeleton elements that may be selected dependent on run-time information is the fact that different composite services can be derived from one and the same skeleton.

In the present context, a skeleton is defined using three different types of skeleton elements that are all illustrated in Fig. 9:

[1.] start and end elements
[2.] service templates
[3.] skeleton conditions.

These skeleton elements are discussed in more detail in the following sections. Examples for the usage of such elements for the creation of skeletons will be presented later on.

Start and End Elements

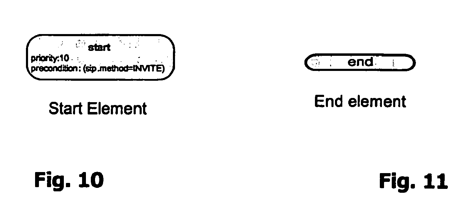

A skeleton may contain one start element and at least one end element. Graphical examples for a start element and an end element are shown in Figs. 10 and 11. The start element marks the beginning of a skeleton and describes skeleton properties, and the end element marks the end of skeleton. The resulting execution path (or execution workflow) from the start element to the end element defines a particular composite service derived from this skeleton.

The primary purpose of start and end elements is to clearly define modules of functionality that may be easily referenced. A start element may have an identifier, which can be used as a skeleton reference. An end element can have a reference to other skeletons that could be executed after execution of the end element. In this way, highly complex execution workflows can be built by connecting individual skeletons.

As shown in Fig. 10, a start element can contain additional attributes which describe properties and requirements of a skeleton and help the MSCE to select an appropriate initial skeleton (e.g. from a skeleton database accessible to the MSCE). The attribute "precondition" has a logical expression as a value and describes requirements for skeleton execution. In a precondition attribute, SIP message attributes and run-time information can be referenced using logical expressions. A skeleton will only be executed if its preconditions are matched.

If more than one skeleton could be executed (e.g. because several skeletons have matching preconditions), the "priority" attribute of a skeleton start element will be analysed. This attribute has an integer value and defines the order in which skeletons should be executed. The lowest priority is 0. If the precondition attribute is missing, it will be assumed that the skeleton matches always. The default priority of skeletons without a "priority" attribute is 0.

Service Template

A service template is a placeholder for one specific service in the skeleton, and more precisely for a reference to one specific service. Service templates thus constitute skeleton elements.

Based on information included in each service template, a set or list of candidate services can be generated at run-time (th set or list could also include only a single candidate service). The set or list of candidate services can be defined in various ways, for example by

[1.] an enumeration of candidate services or
[2.] an abstract description of the required properties of candidate services.

An enumeration consists of direct references to specific services so that these services can be taken over directly into a list of candidate services. An abstract description of properties may have a form of service constraints as described in the above section "Service Constraints". All services that fulfil the constraints of the service template will be included in the list of candidate services. In order to determine the candidate services for filling the constraints of the service template, the MSCE or any other composing component may consult a database including the service description of all the available services (such as the database 110 in Fig. 3B).

Combining the above two referencing approaches, the enumeration can be also modelled through constraints of the following form:

$$(srv=id\_of\_first\_service\_in\_enumeration) \mid$$

$$(srv=id\_of\_second....)$$

This combination approach allows having both enumerations and constraints in one service template.

In addition to constraints or enumerations, a service template can contain service attributes (see above section "Service Attributes"), which may be merged with service attributes of the service. As (global and local) service constraints are also defined using service attributes, it is possible to define additional service constraints in the service template. In this way the properties of a service can be changed through its participation in a composite service. However, additional attributes of a service inherited from a skeleton element should apply only in the scope of this composite service and skeleton, i.e. other composite services and skeletons do not see these additional attributes. For example, an additional service attribute which describes the position of a service in a composite service (see example 3 below), describes the service position of service only in a specific composite service. The individual service attributes that may be added to a service template are defined by the service class *service_template*.

The selected service has no impact on previous, i.e. already selected and/or executed, services. Constraints only impact the selection of a service for the current and possibly for the next service templates in the scope of current composite service. This makes global constraints in service templates applicable only to the next skeleton elements (i.e. skeleton elements which have not yet been executed).

A particular case of a service template is a service template without any description and with empty enumeration. Such service templates cannot be used for a description of any particular service, but they can be useful for defining additional properties and limitations for a composite service (e.g. global constraints can be defined in such service templates). A special use-case for service templates is specifying additional constraints for correlated composite services.

The following examples illustrate possible contents of service templates.

1) enumeration

**serviceA, serviceB, serviceC, serviceD**

list of compatible services: serviceA, serviceB, serviceC, serviceD
2) with a constraint

**(&(l(service _provider=providerA) (service_provider=provideB))
(function=VoIP))**

list of compatible services: all services from providerA and providerB with VoIP functionality.

1) with enumeration and a constraint:

**(l(srv=serviceA) (srv=serviceB) (function=VoIP))**

list of allowed services: serviceA and serviceB and all services with VoIP functionality.

2) with additional attributes

**(l(srv=serviceA) (srv-serviceB) (function=VoIP))**
**service_position_in_composition :3**

The additional service attribute *service_position_in_composition* describes the position of the service in the composite service. The service that will participate in the composite service gets this additional attribute from a service template

3) with additional constraints

**(l(srv=serviceA) (srv=serviceB)    (function=VoIP))**
**global_constraint               : (provider=providerA)**
**constraint                      : (function=white_list)**

The additional constraint permits the combination of the selected service with the services with function white_list and enforces that all services in the composite service belong to providerA.
4) "empty" template (i.e., no service specified) defining a global constraint

**global_constraints     : (provider=providerA)**

All following services must belong to providerA

In most cases, the results of the evaluation of each service template is the identification, selection and execution of at least one constituting service, so that this skeleton element has impact outside the MSCE. In contrast, the skeleton element described in the next section only has impact inside the MSCE.

Conditional Element

In a skeleton, a condition element is a conditional statement or expression that will be evaluated at skeleton execution time typically based on run-time information. In one example, and depending on the results of the evaluation, one out of two or more skeleton branches could be selected. Thus, conditional elements provide control over skeleton execution and allow the creation of composite services depending on run-time and other variables.

The MSCE may provide a set of run-time variables that can be used to evaluate conditional elements when parsing the skeleton. Such run-time variables include for example the original request, the user profile, the participating devices, the current status of skeleton execution and the current status of the composite service. Run-time variables can have logical, numerical or textual values.

The following operations can be used with run-time variables depending on their values:

| Operands / Result Type | Logical | Numerical | Textual |
|---|---|---|---|
| **Logical** | OR, AND, NOT, XOR | =, <, > | =, contain |
| **Numerical** | | +, -, * | length, position |
| **Textual** | | | upper_case, sub_string |

In addition to these operations, the usage of parentheses in conditional elements is allowed. The invocation of services from conditional elements is not allowed in the present embodiment.

The value of run-time variables cannot be changed directly by skeleton elements. However, the execution of skeleton elements may result in the modification of information regarding the skeleton execution, e.g. of the currently processed element, execution results, etc. Skeleton elements may therefore have indirect impact on run-time variables. Furthermore, individual services can create new and change existing run-time variables. In this way, services can influence indirectly the creation of a composite service.

For each possible result of a conditional element, a skeleton branch should be defined. The definition of a default branch is allowed. If no branch corresponds to the result of the conditional element, skeleton execution is terminated.

The following examples illustrate for the content of conditional elements:

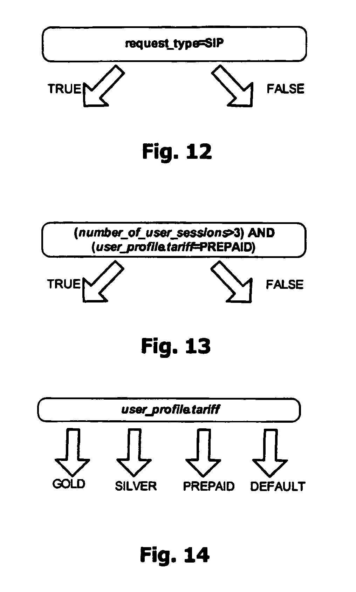

1. A logical condition with the runtime variable *request_type,* which is TRUE if the original request was a SIP request (see Fig. 12).

2. A more complex condition that will not allow a user with a prepaid tariff to have more than 3 parallel composite services (see Fig. 13).

3. A textual condition with a default case that selects a branch depending on user tariff (see Fig. 14).

After introducing various skeleton elements in the previous sections, the following sections will focus on discussing possible skeleton combinations.

Skeleton Examples

The simplest form of a skeleton is static, e.g. without any conditions and with all service templates being an enumeration of a single service. The skeleton will nonetheless be parsed during run-time to compose a composite service. Skeletons with fixed services can be useful for the definition of static service groups to be included in other skeletons, e.g. a service *white list* must be always executed after the service *black list.*

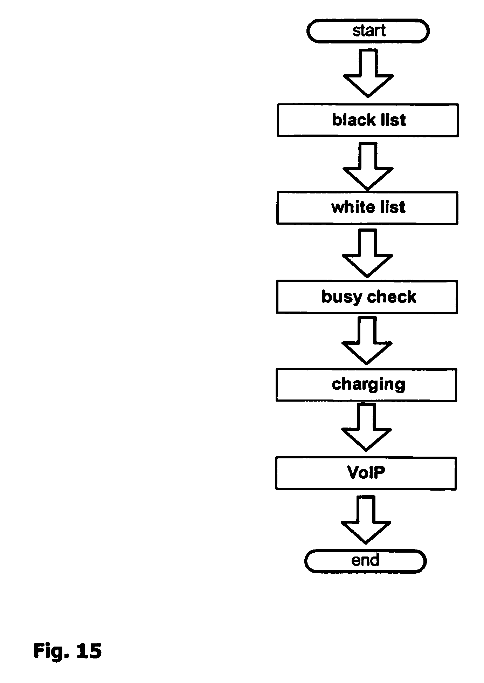

Fig. 15 illustrates this special case. The services included are black list, white list, busy check, VoIP and charging. These services will be executed one after another in the order indicated by the flowchart of Fig. 15.

Since there are no alternatives, only one composite service can be created from the skeleton of Fig. 15. Consequently, the execution of a composite service based on such a skeleton will fail if at least one of its constituting services is not available at runtime or if its execution fails.

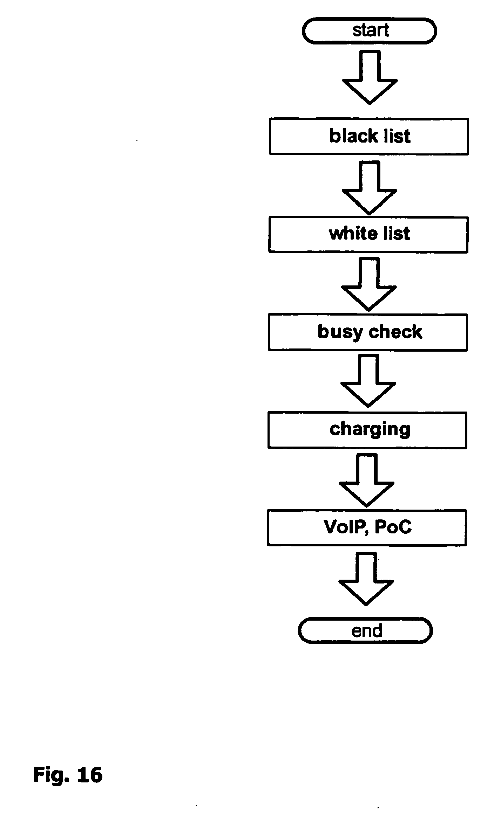

The skeleton example illustrated in Fig. 16 presents a skeleton extended by means of an alternative service for VoIP that is defined in the service template. If during execution of this skeleton the specified VoIP service cannot be successfully executed, PoC will be executed instead.

Skeletons with alternative services provide a simple and powerful mechanism for the definition of fall-back scenarios. However, more complex fallback scenarios with more than one step (e.g. if service *A* is unavailable then service B and if service *B* is unavailable then service *C* should be executed) are difficult to model by defining alternatives. Furthermore, it is still not possible to analyse run-time information (except information from previous service execution) and to make service selection depending on this information.

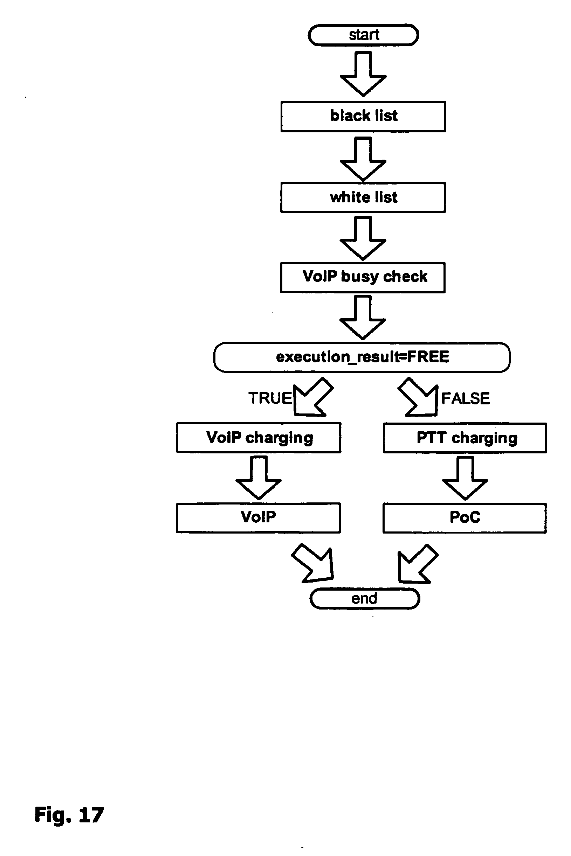

The aforementioned issues can be solved by introducing condition elements. Fig. 17 illustrates an example flowchart for a skeleton with a simple condition. In an example, the result of the execution of *VoIP busy check* services will be checked by the condition *execution.result=FREE"*. The expression *execution. result* is the identifier of a textual run-time variable where the result of the last service execution will be stored. If the result of condition evaluation is *"TRUE"*, the *VoIP Charging* service followed by *VoIP* will be executed. If the result of condition is *"FALSE"*, the *PoC Charging* followed by PoC will be executed.

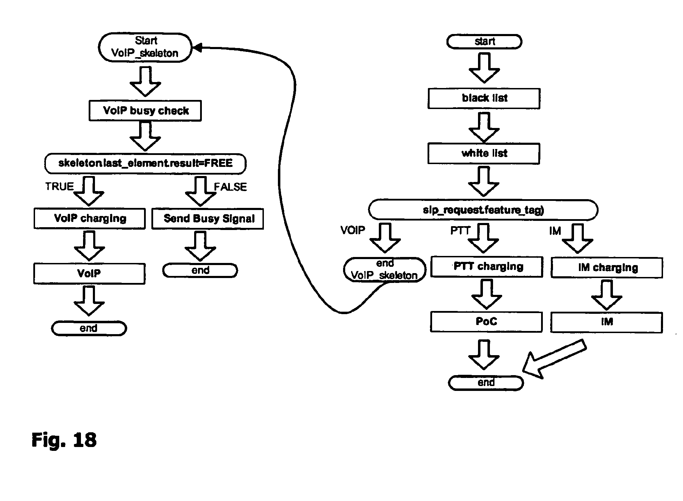

One other example for a skeleton incorporating a condition is shown in Fig. 18. In this example, the result of the condition is textual, i.e. more than two different results are possible. Here, the run-time variable *sip_request. feature_ tag* could contain *"VoIP', "PoC"* or *"IM"* ("Instant Messaging''). For each of these results a skeleton branch is defined. One branch is defined as an external skeleton with identifier *" VoIP_skeleton"* and is referenced from an end element.

Especially interesting for IMS are so-called correlated SIP sessions as described in the Internet draft "The Session Initiation Protocol (SIP) Same-Session Header Field" (draft-loreto-sipping-dialog-correlation-00). Based on run-time information it is feasible to identify correlated SIP sessions for the purpose of creating composite services.

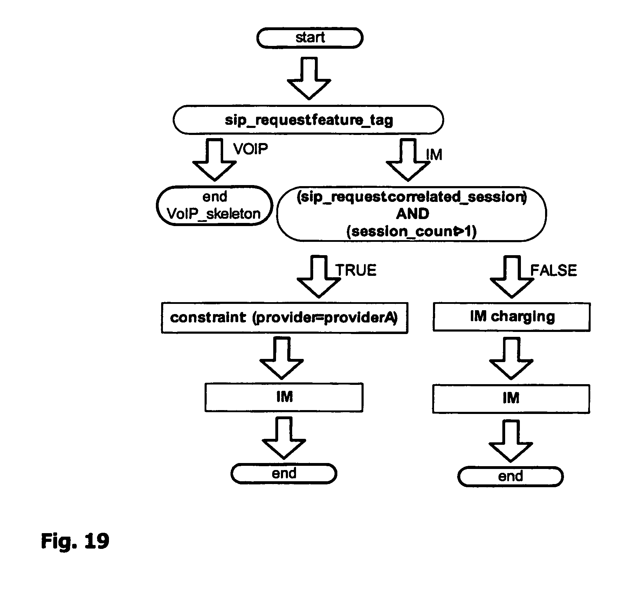

An example of a skeleton the execution of which is depending on correlation is shown in Fig. 19. In this example the composite service for IM will include an *IM charging* service only in the case of a non-correlated SIP session, and will have an additional global constraint in case of correlated sessions.

### 3. Run-time information

One of the key advantages of the approach proposed herein is the ability to dynamically adapt composite service creation based on run-time information. Run-time information describes for example the current status of service requests (e.g. composite service requests), user preferences (e.g. as defined in an IMS HSS) or a network status. Run-time information may be assigned to a composite service and may describe the current status from the point of view of the composite service (e.g. run-time information for a specific composite service includes user preferences only from subscribers that participate in this composite service).

The run-time information is modelled through run-time variables. A run-time variable may be similar to a service attribute and may consist of a variable identifier and a value. Examples for run-time variables can be (in LDIF notation):

    user_profile.tariff: gold
    sip_request.method: INVITE
    skeleton.service_count: 10

In addition to composite service specific variables, there may exist global variables which can be accessed from all sessions. In the present embodiment, identifier of a global variable always starts with "global." (e.g. global.user_ session_count).

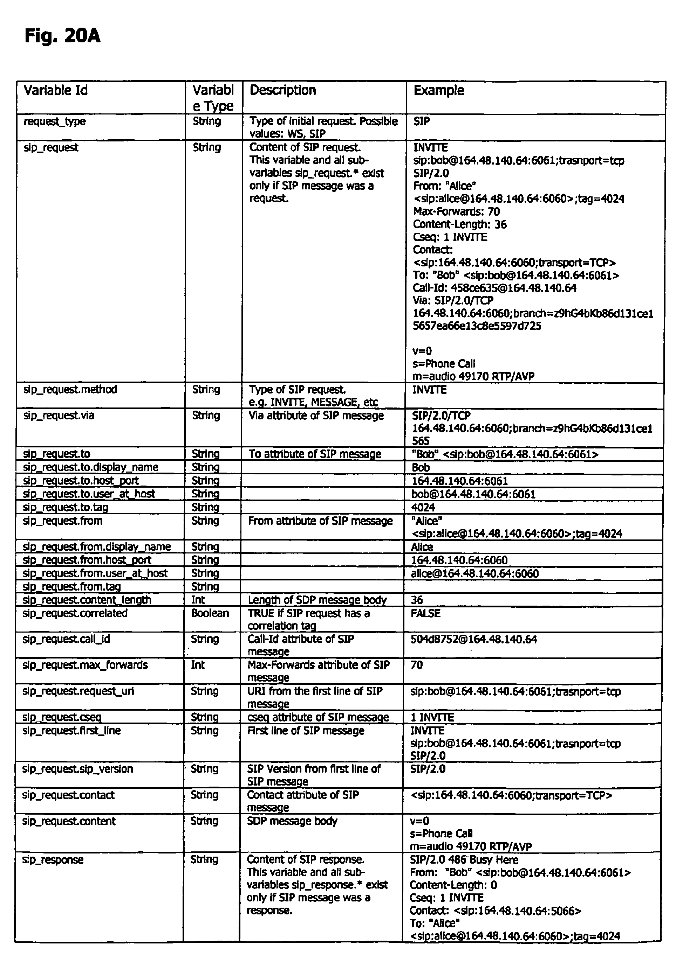

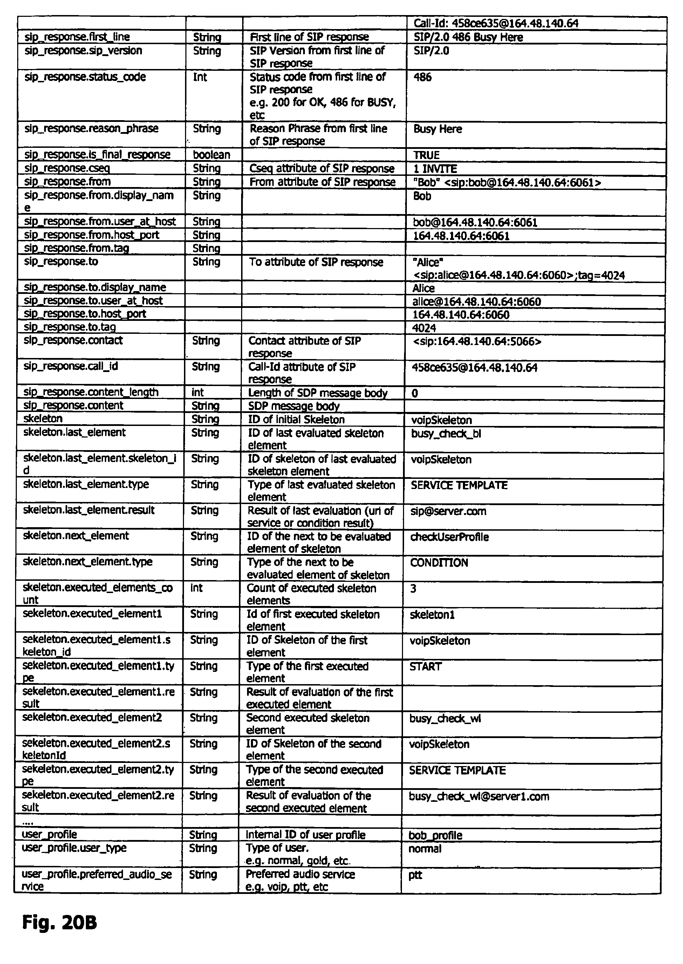

The tables of Figs. 20A and 20B provide an overview of standard run-time variables for SIP sessions and IMS services. Moreover, external services and applications can define additional run-time variables and provide in this way their run-time information to the MSCE and to composite services. Further, it is conceivable that services (e.g. an VoIP service) can provide information about their status using an interface to these objects (e.g. the VoIP object) and the skeleton can include conditions, in which this status will be evaluated. An external run-time variable is independent from the composite service and is identical in all run-time environments. The external run-time objects allow better integration of external services into the composition process. However, the skeleton designer must known these external services and their objects.

Run-time variables may be referenced from a skeleton and from service descriptions in the following form:

    $(object_identifier.variable_identifier)

For example:

    $(user_profile.tariff)
    $(skeleton.last_element.result)

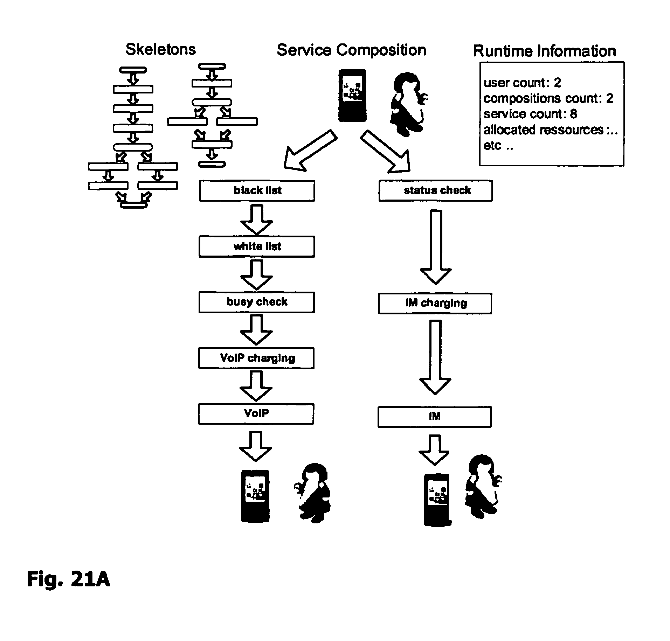

Fig. 21A shows an example of a composition scenario including two parallel telecommunication sessions as well as the related run-time information. As shown in Fig. 21A, there can be multiple telecommunication sessions for the same users under the control of multiple skeletons. In the example of Fig. 21A, the left branch shows a VoIP session, and the right branch shows an IM session. The decisions inside the respective skeletons or about the selection of one of these branches may be based on run-time information as shown in the upper-right corner of Fig. 21A. For example, the condition checked for selection of a specific branch may be that there is no other session of the same type currently on-going, or that the resources required for a given kind of session are available. As also shown in Fig. 21A, there may be a certain collection of run-time information about all sessions and resources belonging to a specific user or subscriber.

Fig. 21B shows another example of a skeleton that illustrates the reaction of the MSCE on the receipt of run-time information from the CEA as described with reference to Fig. 7A above. The scenario of Fig. 21B relates to a "RedirectOnBusy" use case in which the SIP response BUSY (SIP 486 response) is used to trigger an IM notification of the calling party about the unavailability of the called party.

The core of the use case illustrated in Fig. 21B is implemented by the elements following the LeaveContainer element 212 of the skeleton. After skeleton element 212, a SIP response message including corresponding run-time information is expected. To evaluate the expected run-time information, a condition element 214 is provided that checks if the SIP response is a BUSY message. If it is determined by the condition element 214 that the SIP response is not a BUSY message, the right branch is taken and the composite service ends. On the other hand, i.e. in the case of a BUSY message, the left branch is taken, and the since the BUSY message is not a final response (e.g. not a "200 OK" message), the service composition process and the construction of the SIP chain can be continued. More specifically, a service called "NotifyOnBusy" is selected (skeleton element 216). This service is programmed to respond with a BUSY response message and to additionally send an instant message to the calling party explaining the reason for this response. The example of Fig. 21B clearly shows the advantages of processing subsequent (i.e. non-initial) SIP requests or responses for building more dynamic non-linear composite services.

### 4. User interface for creating and modifying composite service skeletons

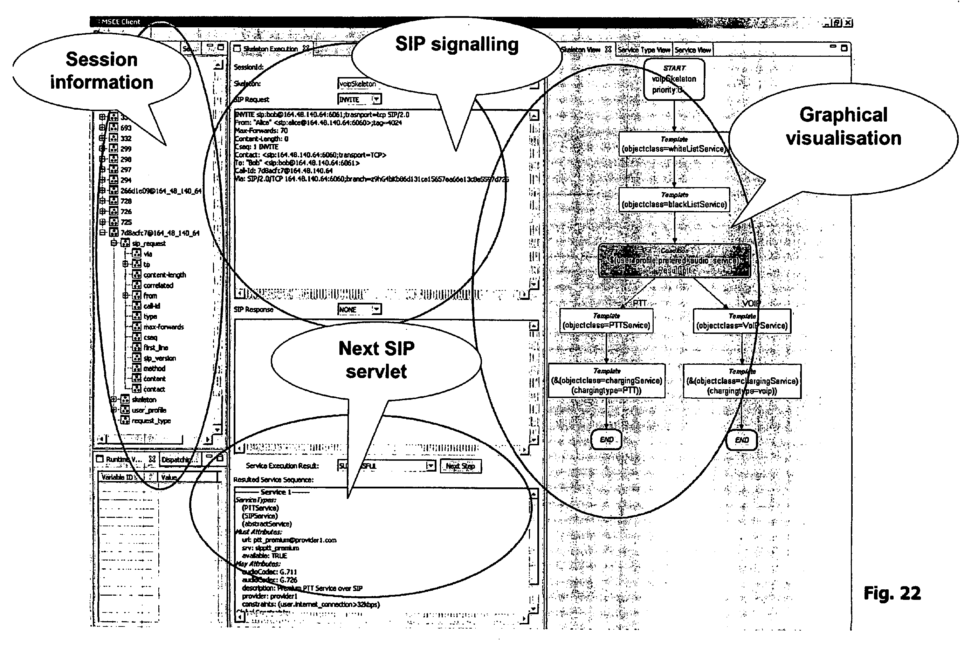

Fig. 22 shows an exemplary embodiment of a GUI for creating and modifying composite service skeletons to be used in a telecommunication network. The GUI of Fig. 22 may be an implementation of the user interface 202 shown in Fig. 3B.

As shown in Fig. 22, the graphical user interface includes four dedicated display portions. A first display portion includes a graphical visualisation of the individual skeleton elements that constitute in their entirety a model one specific composite service. The composite service as such illustrated in Fig. 22 corresponds to the skeleton example illustrated in Fig. 17. A second display portion illustrates the related run-time SIP signalling when processing the skeleton during run-time. A third display portion shows the next SIP servlet (i.e. the next service to be executed), and a fourth display portion shows general session information.

As has become apparent from the above description of preferred embodiments, the approach proposed herein allows for an efficient creation of services based on complex service interaction scenarios. The present approach permits the creation of more complex service interaction scenarios than the conventional service filtering mechanisms such as IFC-based techniques.

Additionally, the present approach provides a great potential for cost savings and system integration projects. In particular customer adaptation activities may profit considerably from the present approach, that allows the combination of existing services and existing functionalities to create new solutions in a time efficient manner.

The present approach can be used for realising the SCIM of 3GPP, for implementing the composer servlet of WLSS or for realising an application router (AR) of JMS 289 with enhanced functionalities. Moreover, the MSCE outlined in the above embodiments could in future be moved from the application/service layer to the session control layer and take over functionalities of the S-CSCF as far as service composition is concerned, thus rendering IFC-based techniques obsolete.

While the current invention has been described in relation to its preferred embodiments, it is to be understood that this disclosure is only illustrative. Accordingly, it is intended that the invention be limited only by the scope of the claims appended hereto.

### Claims

1. A method of controlling a service composition process for a composite service involving at least one telecommunication session for a user of a telecommunication network, the method comprising the following steps that are performed on a service execution platform within an application layer:

   a. receiving, from a session control layer, a message relating to a new or an existing telecommunication session (402);

b. contacting a service compositor (54) with respect to a composite service involving the telecommunication session to which the message pertains (404), **characterized by**

c. receiving, from the service compositor, a first command 406;

d. initiating execution of the first command (408);

e. determining run-time information that becomes available in context with execution of the first command (410); and

f. transmitting the run-time information to the service compositor (412).

**2.** The method of claim 1, wherein
the first command relates to an execution of one or more first constituting services of the composite service, and wherein step d. comprises initiating execution of the one or more first constituting services.

**3.** The method of claim 1 or 2, further comprising the following steps:

g. receiving, from the service compositor and in response to the transmitted run-time information, a second command; and

h. initiating execution of the second command.

**4.** The method of claim 3, wherein
the second command relates to an execution of one or more second constituting services of the composite service, and wherein step h. comprises executing the one or more second constituting services.

**5.** The method of claim 3 or 4, wherein
the second or a third command is an indication that the service composition process is completed, and wherein step h. or a subsequent step comprises returning control to the session control layer.

**6.** The method of one of claims 1 to 3, wherein
the first command and/or the second command relates to at least one of: manipulation, generation and/or transmission of a session-related message towards the session control layer; definition and/or manipulation of variables on the service execution platform; deletion or removal of one or more constituting services on the service execution platform; execution of service execution platform-specific instructions.

**7.** The method of one of claims 1 to 6, further comprising
receiving, from the service compositor, a service composition identifier relating to a specific service composition process involving the at least one telecommunication session.

**8.** The method of claim 7, further comprising
maintaining an association between each service composition identifier and one or more sessions involved in the respective composite service.

**9.** The method of claim 7 or 8, wherein
the service composition identifier is transmitted to the service compositor in at least one of step b. and f..

**10.** The method of one of claims 1 to 9, wherein the run-time information determined in step e. relates to at least one of:

i. changes on the service execution platform and

ii. a result of the at least one first constituting service.

**11.** The method of step 10, wherein
the changes on the service execution platform are indicative of a message received from the session control layer.

**12.** The method of claim 10, wherein
the result of the at least one first constituting service is an indication if the at least one first constituting service has successfully been executed.

**13.** A method of controlling a service composition process for a composite service involving at least one telecommunication session for a user of a telecommunication network, the method comprising the steps of:

a. receiving, from a service execution component (52), a notification relating to a composite service involving at least one telecommunication session (422), **characterized by**

b. analysing, during run-time, a skeleton specifying a service pattern for the composite service to determine at least one first action to be performed by the service execution component, wherein the run-time is a period of time starting with generation or receipt of a triggering event or a period of time spanned by the composition and execution process (424);

c. transmitting, to the service execution component, a first command relating to the at least one first action (426); and

d. receiving, from the service execution component, run-time information that becomes available in context with execution of the first command (428).

14. The method of claim 13, wherein
step b. comprises determining one or more first constituting services of the composite service, and wherein the first command transmitted in step c. relates to an execution of the one or more first constituting services.

15. The method of claim 13 or 14, further comprising the steps of:

e. continuing analysing the skeleton taking into account the run-time information to determine at least one second action to be performed by the service execution component; and

f. transmitting, to the service execution component, a second command relating to the at least one second action.

16. The method of claim 15, wherein
step e. comprises determining one or more second constituting services of the composite service, and wherein the second command transmitted in step f. relates to an execution of the one or more second constituting services.

17. The method of one of claims 13 to 16, further comprising
transmitting, to the service execution component, an identifier relating to the ongoing service composition process.

18. The method of claim 17, wherein
at least one of the notification in step a. and the run-time information in step d. is received together with the identifier relating to the ongoing service composition process.

19. The method of one of claims 13 to 18, wherein
the service pattern is non-linear and includes at least one branching point.

20. The method of claim 19, wherein
for each branching point a branching condition is specified in the skeleton.

21. The method of claim 20, wherein
the branching condition is evaluated taking into account the run-time information received in step d..

22. The method of one of claims 13 to 21, wherein
the determination performed in at least one of the analysing steps b. and e. comprises selecting a constituting service out of a plurality of candidate services.

23. The method of claim 22, wherein
the selection is performed taking into account at least one of constraints specified in service references included in the skeleton and constraints specified in a service description associated with the referenced services.

24. The method of claim 22 or 23, wherein
the selection is performed taking into account constraints describing at least one of interactions and dependencies between two or more services or between two or more sessions.

25. The method of one of claims 13 to 24, wherein
the service pattern includes a plurality of service placeholders, and each service placeholder includes a service reference to one or more candidate services.

26. The method of claim 25, wherein

the determination performed in at least one of the analysing steps b. and e. comprises:

- determining, from a specific service reference in the service pattern, a set of candidate services;
- evaluating one or more constraints associated with each candidate service of the set; and
- selecting a service from those candidate services of the set that do not infringe any constraint.

**27.** The method of one of claims 13 to 26 further enabling the creation and/or modification of composite service skeletons in the telecommunication network for composite services relating to the at least one telecommunication session for a user of the telecommunication network, the method comprising the step of providing a user interface adapted to create and/or modify a skeleton of a composite service, the skeleton specifying the service pattern logically linking a plurality of service references, the skeleton including information that allows the analysis of the skeleton during the run-time to determine:

- constituting services that form the composite service; and
- an execution workflow for the constituting services.

**28.** A computer program product comprising program code portions for performing the steps of one of claims 1 to 27 when the computer program product is run on a computer system.

**29.** The computer program product of claim 28, stored on a computer-readable recording medium.

**30.** A device for controlling a service composition process for a composite service involving at least one telecommunication session for a user of a telecommunication network, the device being adapted to be deployed on a service execution platform within an application layer and comprising:

a. a first interface adapted to receive, from a session control layer (CSCF), a message relating to a new or an existing telecommunication session (402);
b. a messaging component adapted to contact a service compositor (54) with respect to a composite service involving the telecommunication session to which the message pertains (404),
**characterized by**
c. a second interface adapted to receive, from the service compositor, a first command (406);
d. a processor adapted to initiate execution of the first command (408);
e. a determination component adapted to determine run-time information that becomes available in context with execution of the first command (410); and
f. a third interface adapted to transmit the run-time information to the service compositor (412).

**31.** A device for controlling a service composition process for a composite service involving at least one telecommunication session for a user of a telecommunication network, the device comprising:

a. a first interface adapted to receive, from a service execution component (52), a notification relating to a composite service involving at least one telecommunication session (422),
**characterized by**
b. an analysing component adapted to analyse, during run-time, a skeleton specifying a service pattern for the composite service to determine at least one first action to be performed by the service execution component, wherein the run-time is a period of time starting with generation or receipt of a triggering event or a period of time spanned by the composition and execution process (424);
c. a second interface adapted to transmit, to the service execution component, a first command relating to the at least one first action (426); and
d. a third interface adapted to receive, from the service execution component, run-time information that becomes available in context with execution of the first command (428).

**Patentansprüche**

**1.** Verfahren zum Steuern eines Dienstzusammensetzungsprozesses für einen zusammengesetzten Dienst, der zumindest eine Telekommunikationssitzung für einen Benutzer eines Telekommunikationsnetzwerks umfasst, wobei das Verfahren die nachfolgenden Schritte umfasst, die auf einer Dienstausführungsplattform innerhalb einer Anwendungsschicht ausgeführt werden:

a. Empfangen, von einer Sitzungssteuerschicht, einer Nachricht, die sich auf eine neue oder auf eine existierende Telekommunikationssitzung bezieht (402);

b. Kontaktieren eines Dienstzusammensetzers (54) hinsichtlich eines zusammengesetzten Dienstes, der die Telekommunikationssitzung umfasst, auf die die Nachricht Bezug nimmt (404),

**gekennzeichnet durch**

c. Empfangen, von dem Dienstzusammensetzer, eines ersten Befehls (406);

d. Initiieren einer Ausführung des ersten Befehls (408);

e. Bestimmen von Laufzeitinformationen, die in Zusammenhang mit der Ausführung des ersten Befehls verfügbar werden (410); und

f. Übertragen der Laufzeitinformationen zu dem Dienstzusammensetzer (412).

2. Verfahren gemäß Anspruch 1, wobei
sich der erste Befehl auf eine Ausführung eines oder mehrerer erster bildender Dienste des zusammengesetzten Dienstes bezieht, und wobei Schritt d. ein Initiieren einer Ausführung des einen oder der mehreren ersten bildenden Dienste umfasst.

3. Verfahren gemäß Anspruch 1 oder 2, weiterhin umfassend die nachfolgenden Schritte:

g. Empfangen, von dem Dienstzusammensetzer und als Antwort auf die übertragenen Laufzeitinformationen, eines zweiten Befehls; und

h. Initiieren einer Ausführung des zweiten Befehls.

4. Verfahren gemäß Anspruch 3, wobei
sich der zweite Befehl auf eine Ausführung eines oder mehrerer zweiter bildender Dienste des zusammengesetzten Dienstes bezieht, und wobei Schritt h. eine Ausführung des einen oder der mehreren zweiten bildenden Dienste umfasst.

5. Verfahren gemäß Anspruch 3 oder 4, wobei
der zweite oder ein dritter Befehl eine Angabe ist, dass der Dienstzusammensetzungsprozess vollendet ist, und wobei Schritt h. oder ein nachfolgender Schritt ein Zurückgeben der Steuerung an die Sitzungssteuerschicht umfasst.

6. Verfahren gemäß zumindest einem der Ansprüche 1 bis 3, wobei
der erste Befehl und / oder der zweite Befehl sich auf zumindest eines beziehen / bezieht aus: Manipulation, Erzeugung und / oder Übertragung einer sitzungsbezogenen Nachricht zu der Sitzungssteuerschicht; Definition und / oder Manipulation von Variablen auf der Dienstausführungsplattform; Löschung oder Entfernung von einem oder mehreren bildenden Diensten auf der Dienstausführungsplattform; Ausführung von dienstausführungsplattformspezifischen Instruktionen.

7. Verfahren gemäß zumindest einem der Ansprüche 1 bis 6, weiterhin umfassend
Empfangen, von dem Dienstzusammensetzer, einer Dienstzusammensetzungskennung, die sich auf einen spezifischen Dienstzusammensetzungsprozess bezieht, der die zumindest eine Telekommunikationssitzung umfasst.

8. Verfahren gemäß Anspruch 7, weiterhin umfassend
Pflegen einer Assoziierung zwischen jeder Dienstzusammensetzungskennung und einer oder mehreren Sitzungen, die in dem jeweiligen zusammengesetzten Dienst umfasst ist oder sind.

9. Verfahren gemäß Anspruch 7 oder 8, wobei
die Dienstzusammensetzungskennung zu dem Dienstzusammensetzer in zumindest einem aus Schritt b. und f. übertragen wird.

10. Verfahren gemäß zumindest einem der Ansprüche 1 bis 9, wobei die in Schritt e. bestimmten Laufzeitinformationen sich auf zumindest eines beziehen aus:

i. Änderungen auf der Dienstausführungsplattform und

ii. ein Ergebnis des zumindest einen ersten bildenden Dienstes.

11. Verfahren gemäß Anspruch 10, wobei
die Änderungen auf der Dienstausführungsplattform eine Nachricht anzeigen, die von der Sitzungssteuerschicht empfangen wurde.

**12.** Verfahren gemäß Anspruch 10, wobei
das Ergebnis des zumindest einen ersten bildenden Dienstes eine Angabe ist, ob der zumindest eine erste bildende Dienst erfolgreich ausgeführt wurde.

**13.** Verfahren zum Steuern eines Dienstzusammensetzungsprozesses für einen zusammengesetzten Dienst, der zumindest eine Telekommunikationssitzung für einen Benutzer eines Telekommunikationsnetzwerks umfasst, wobei das Verfahren die Schritte umfasst:

a. Empfangen, von einer Dienstausführungskomponente (52), einer Benachrichtigung, die sich auf einen zusammengesetzten Dienst bezieht, der zumindest eine Telekommunikationssitzung umfasst (422), **gekennzeichnet durch**
b. Analysieren, während der Laufzeit, eines Skeletts, das ein Dienstmuster für den zusammengesetzten Dienst spezifiziert, um zumindest eine erste Aktion zu bestimmen, die **durch** die Dienstausführungskomponente durchzuführen ist, wobei die Laufzeit eine Zeitspanne ist, die mit einer Erzeugung oder einem Empfang eines auslösenden Ereignisses beginnt, oder eine Zeitspanne ist, die **durch** den Zusammensetzungs- und Ausführungsprozess aufgespannt wird (424);
c. Übertragen, zu der Dienstausführungskomponente, eines ersten Befehls, der sich auf die zumindest eine erste Aktion bezieht (426); und
d. Empfangen, von der Dienstausführungskomponente, von Laufzeitinformationen, die in Zusammenhang mit der Ausführung des ersten Befehls verfügbar werden (428).

**14.** Verfahren gemäß Anspruch 13, wobei
Schritt b. ein Bestimmen von einem oder mehreren ersten bildenden Diensten des zusammengesetzten Dienstes umfasst, und wobei der in Schritt c. übertragene erste Befehl sich auf eine Ausführung des einen oder der mehreren ersten bildenden Dienste bezieht.

**15.** Verfahren gemäß Anspruch 13 oder 14, weiterhin umfassend die Schritte:

e. Fortsetzen eines Analysieren des Skeletts unter Berücksichtigung der Laufzeitinformationen, um zumindest eine zweite Aktion zu bestimmen, die durch die Dienstausführungskomponente durchzuführen ist; und
f. Übertragen, zu der Dienstausführungskomponente, eines zweiten Befehls, der sich auf die zumindest eine zweite Aktion bezieht.

**16.** Verfahren gemäß Anspruch 15, wobei
Schritt e. ein Bestimmen eines oder mehrerer zweiter bildender Dienste des zusammengesetzten Dienstes umfasst, und wobei der in Schritt f. übertragene zweite Befehl sich auf eine Ausführung des einen oder der mehreren zweiten bildenden Dienste bezieht.

**17.** Verfahren gemäß zumindest einem der Ansprüche 13 bis 16, weiterhin umfassend
Übertragen, zu der Dienstausführungskomponente, einer Kennung, die sich auf den im Ablauf befindlichen Dienstzusammensetzungsprozess bezieht.

**18.** Verfahren gemäß Anspruch 17, wobei
zumindest eine der Benachrichtigung in Schritt a. und der Laufzeitinformationen in Schritt d. zusammen mit der Kennung empfangen werden, die sich auf den im Ablauf befindlichen Dienstzusammensetzungsprozess bezieht.

**19.** Verfahren gemäß zumindest einem der Ansprüche 13 bis 18, wobei
das Dienstmuster nicht-linear ist und zumindest einen Abzweigungspunkt umfasst.

**20.** Verfahren gemäß Anspruch 19, wobei
für jeden Abzweigungspunkt in dem Skelett eine Abzweigungsbedingung spezifiziert ist.

**21.** Verfahren gemäß Anspruch 20, wobei
die Abzweigungsbedingung unter Berücksichtigung der in Schritt d. empfangenen Laufzeitinformationen ausgewertet wird.

**22.** Verfahren gemäß zumindest einem der Ansprüche 13 bis 21, wobei
die in zumindest einem der Analyseschritte b. und e. durchgeführte Bestimmung ein Auswählen eines bildenden Dienstes aus einer Vielzahl von Kandidatendiensten umfasst.

**23.** Verfahren gemäß Anspruch 22, wobei
die Auswahl durchgeführt wird unter Berücksichtigung zumindest eines aus Randbedingungen, die in in dem Skelett umfassten Dienstreferenzen spezifiziert sind, und Randbedingungen, die in einer mit den referenzierten Diensten assoziierten Dienstbeschreibung spezifiziert sind.

**24.** Verfahren gemäß Anspruch 22 oder 23, wobei
die Auswahl durchgeführt wird unter Berücksichtigung von Randbedingungen, die zumindest eine aus Interaktionen und Abhängigkeiten zwischen zwei oder mehr Diensten oder zwei oder mehr Sitzungen beschreiben.

**25.** Verfahren gemäß zumindest einem der Ansprüche 13 bis 24, wobei
das Dienstmuster eine Vielzahl von Dienstplatzhaltern umfasst, und jeder Dienstplatzhalter eine Dienstreferenz auf einen oder mehrere Kandidatendienste umfasst.

**26.** Verfahren gemäß Anspruch 25, wobei
die in zumindest einem der Analyseschritte b. und e. durchgeführte Bestimmung umfasst:

- Bestimmen, aus einer spezifischen Dienstreferenz in dem Dienstmuster, eines Satzes von Kandidatendiensten;
- Auswerten einer oder mehrerer Randbedingungen, die mit jedem Kandidatendienst des Satzes assoziiert ist oder sind; und
- Auswählen eines Dienstes aus jenen Kandidatendiensten des Satzes, die keine Randbedingung verletzen.

**27.** Verfahren gemäß zumindest einem der Ansprüche 13 bis 26, das weiterhin die Erstellung und / oder Modifikation von zusammengesetzten Dienstskeletten in dem Telekommunikationsnetzwerk für zusammengesetzte Dienste ermöglicht, die sich auf die zumindest eine Telekommunikationssitzung für einen Benutzer des Telekommunikationsnetzwerks beziehen, wobei das Verfahren den Schritt umfasst Bereitstellen einer Benutzerschnittstelle, die eingerichtet ist, um ein Skelett eines zusammengesetztes Dienstes zu erstellen und / oder zu modifizieren, wobei das Skelett das Dienstmuster spezifiziert, das eine Vielzahl von Dienstreferenzen logisch verlinkt, wobei das Skelett Informationen umfasst, die die Analyse des Skeletts während der Laufzeit ermöglichen, um zu bestimmen:

- bildende Dienste, die den zusammengesetzten Dienst ausbilden; und
- ein Ausführungsschema für die bildenden Dienste.

**28.** Computerprogrammprodukt, umfassend Programmcodeabschnitte zur Durchführung der Schritte gemäß zumindest einem der Ansprüche 1 bis 27, wenn das Computerprogrammprodukt auf einem Computersystem läuft.

**29.** Computerprogrammprodukt gemäß Anspruch 28, das auf einem computerlesbaren Aufzeichnungsmedium gespeichert ist.

**30.** Vorrichtung zur Steuerung eines Dienstzusammensetzungsprozesses für einen zusammengesetzten Dienst, der zumindest eine Telekommunikationssitzung für einen Benutzer eines Telekommunikationsnetzwerks umfasst, wobei die Vorrichtung eingerichtet ist, um auf einer Dienstausführungsplattform innerhalb einer Anwendungsschicht eingesetzt zu werden, und wobei sie umfasst:

a. eine erste Schnittstelle, die eingerichtet, um von einer Sitzungssteuerschicht (CSCF) eine Nachricht zu empfangen, die sich auf eine neue oder auf eine existierende Telekommunikationssitzung bezieht (402);
b. eine Nachrichtenaustauschkomponente, die eingerichtet ist, um einen Dienstzusammensetzer (54) hinsichtlich eines zusammengesetzten Dienstes zu kontaktieren, der die Telekommunikationssitzung umfasst, auf die die Nachricht Bezug nimmt (404)
**gekennzeichnet durch**
c. eine zweite Schnittstelle, die eingerichtet ist, um von dem Dienstzusammensetzer einen ersten Befehl zu empfangen (406);
d. einen Prozessor, der eingerichtet ist, um eine Ausführung des ersten Befehls zu initiieren (408);
e. eine Bestimmungskomponente, die eingerichtet ist, um Laufzeitinformationen zu bestimmen, die in Zusammenhang mit der Ausführung des ersten Befehls verfügbar werden (410); und

f. eine dritte Schnittstelle, die eingerichtet ist, um die Laufzeitinformationen zu dem Dienstzusammensetzer zu übertragen (412).

**31.** Vorrichtung zur Steuerung eines Dienstzusammensetzungsprozesses für einen zusammengesetzten Dienst, der zumindest eine Telekommunikationssitzung für einen Benutzer eines Telekommunikationsnetzwerks umfasst, wobei die Vorrichtung umfasst:

a. eine erste Schnittstelle, die eingerichtet ist, um von einer Dienstausführungskomponente (52) eine Benachrichtigung zu empfangen, die sich auf einen zusammengesetzten Dienst bezieht, der zumindest eine Telekommunikationssitzung umfasst (422),
**gekennzeichnet durch**
b. eine Analysekomponente, die eingerichtet ist, um während der Laufzeit ein Skelett zu analysieren, das ein Dienstmuster für den zusammengesetzten Dienst spezifiziert, um zumindest eine erste Aktion zu bestimmen, die durch die Dienstausführungskomponente durchzuführen ist, wobei die Laufzeit eine Zeitspanne ist, die mit einer Erzeugung oder einem Empfang eines auslösenden Ereignisses beginnt, oder eine Zeitspanne ist, die **durch** den Zusammensetzungs- und Ausführungsprozess aufgespannt wird (424);
c. eine zweite Schnittstelle, die eingerichtet ist, um zu der Dienstausführungskomponente einen ersten Befehl zu übertragen, der sich auf die zumindest eine erste Aktion bezieht (426); und
d. eine dritte Schnittstelle, die eingerichtet ist, um von der Dienstausführungskomponente Laufzeitinformationen zu empfangen, die im Zusammenhang mit der Ausführung des ersten Befehls verfügbar werden (428).

## Revendications

**1.** Procédé de commande d'un processus de composition de service pour un service composite impliquant au moins une session de télécommunications pour un utilisateur d'un réseau de télécommunications, le procédé comprenant les étapes suivantes qui sont exécutées sur une plate-forme d'exécution de service à l'intérieur d'une couche application consistant à :

a. recevoir, à partir d'une couche commande de session, un message se rapportant à une nouvelle session de télécommunications ou à une session de télécommunications existante (402) ;
b. contacter un compositeur de service (54) par rapport à un service composite impliquant la cession de communication à laquelle le message appartient (404),
**caractérisé par** les étapes consistant à
c. recevoir, à partir du compositeur de service, une première commande (406) ;
d. lancer l'exécution de la première commande (408) ;
e. déterminer une information d'exécution qui devient disponible en contexte avec l'exécution de la première commande (410) ; et
f. transmettre l'information d'exécution au compositeur de service (412).

**2.** Procédé selon la revendication 1, dans lequel
la première commande se rapporte à une exécution d'un ou plusieurs premiers services de constitution du service composite, et dans lequel l'étape d. comprend le lancement de l'exécution du ou des premiers services de constitution.

**3.** Procédé selon la revendication 1 ou 2, comprenant en outre les étapes suivantes consistant à :

g. recevoir, à partir du compositeur de service et en réponse à l'information d'exécution transmise, une deuxième commande ; et
h. lancer l'exécution de la deuxième commande.

**4.** Procédé selon la revendication 3, dans lequel
la deuxième commande se rapporte à une exécution d'un ou plusieurs deuxièmes services de constitution du service composite, et dans lequel l'étape h. comprend l'exécution du ou des deuxièmes services de constitution.

**5.** Procédé selon la revendication 3 ou 4, dans lequel
la deuxième ou une troisième commande est une indication que le processus de composition de service est terminé, et dans lequel l'étape h. ou une étape suivante comprend une commande de retour vers la couche commande de session.

6. Procédé selon l'une quelconque des revendications 1 à 3, dans lequel
la première commande et/ou la deuxième commande se rapporte à au moins l'un parmi : la manipulation, la génération et/ou la transmission d'une session se rapportant à un message vers la couche commande de session; la
définition et/ou la manipulation de variables sur la plate-forme d'exécution de service ; l'effacement ou la suppression
d'un ou plusieurs services de constitution sur la plate-forme d'exécution de service ; l'exécution d'instructions spécifiques de la plate-forme d'exécution de service.

7. Procédé selon l'une quelconque des revendications 1 à 6, comprenant en outre l'étape consistant à
recevoir, à partir du compositeur de service, un identifiant de composition de service se rapportant à un processus
de composition de service spécifique impliquant la au moins une session de télécommunications.

8. Procédé selon la revendication 7, comprenant en outre l'étape consistant à
maintenir une association entre chaque identifiant de composition de service et une ou plusieurs sessions impliquées
dans le service composite respectif.

9. Procédé selon la revendication 7 ou 8, dans lequel
l'identifiant de composition de service est transmis vers le compositeur de service à au moins l'une parmi les étapes
b. et f..

10. Procédé selon l'une quelconque des revendications 1 à 9, dans lequel l'information d'exécution déterminée à l'étape
e. se rapporte à au moins l'un parmi :

i. des changements sur la plate-forme d'exécution de service et
ii. un résultat du au moins un premier service de constitution.

11. Procédé selon la revendication 10, dans lequel
les changements sur la plate-forme d'exécution de service indiquent un message reçu de la couche commande de
session.

12. Procédé selon la revendication 10, dans lequel
le résultat du au moins un premier service de constitution indique si le au moins un premier service de constitution
a été exécuté avec succès.

13. Procédé de commande d'un processus de composition de service pour un service composite impliquant au moins
une session de télécommunications pour un utilisateur d'un réseau de télécommunications, le procédé comprenant
les étapes consistant à :

a. recevoir, à partir d'un élément d'exécution de service (52), une notification se rapportant à un service composite
impliquant au moins une session de télécommunications (422),
**caractérisé par** les étapes consistant à
b. analyser, pendant l'exécution, un squelette spécifiant un schéma de service pour le service composite pour
déterminer au moins une première action devant être exécutée par l'élément d'exécution de service, dans lequel
l'exécution correspond à une période de temps commençant avec la génération ou la réception d'un événement
déclenchant ou à une période de temps couverte par le processus de composition et d'exécution (424) ;
c. transmettre, vers l'élément d'exécution de service, une première commande se rapportant à la au moins une
première action (426) ; et
d. recevoir, de l'élément d'exécution de service, une information d'exécution qui devient disponible en contexte
avec l'exécution de la première commande (428).

14. Procédé selon la revendication 13, dans lequel
l'étape b. comprend la détermination d'un ou plusieurs premiers services de constitution du service composite, et
dans lequel la première commande transmise à l'étape c. se rapporte à une exécution du ou des premiers services
de constitution.

15. Procédé selon la revendication 13 ou 14, comprenant en outre les étapes consistant à :

e. continuer l'analyse du squelette en prenant en compte l'information d'exécution pour déterminer au moins une deuxième action devant être exécutée par l'élément d'exécution de service ; et

f. transmettre, vers l'élément d'exécution de service, une deuxième commande se rapportant à la au moins une deuxième action.

**16.** Procédé selon la revendication 15, dans lequel
l'étape e. comprend la détermination d'un ou plusieurs deuxièmes services de constitution du service composite, et dans lequel la deuxième commande transmise à l'étape f. se rapporte à une exécution du ou des deuxièmes services de constitution.

**17.** Procédé selon l'une quelconque des revendications 13 à 16, comprenant en outre l'étape consistant à transmettre, vers l'élément d'exécution de service, un identifiant se rapportant au processus de composition de service en cours.

**18.** Procédé selon la revendication 17, dans lequel
au moins l'une parmi la notification à l'étape a. et l'information d'exécution à l'étape d. est reçue conjointement avec l'identifiant se rapportant au processus de composition de service en cours.

**19.** Procédé selon l'une quelconque des revendications 13 à 18, dans lequel
le schéma de service est non linéaire et comprend au moins un point d'embranchement.

**20.** Procédé selon la revendication 19, dans lequel
pour chaque point d'embranchement, une condition d'embranchement est spécifiée dans le squelette.

**21.** Procédé selon la revendication 20, dans lequel
la condition d'embranchement est évaluée en prenant en compte l'information d'exécution reçue à l'étape d..

**22.** Procédé selon l'une quelconque des revendications 13 à 21, dans lequel
la détermination effectuée à au moins l'une parmi les étapes d'analyse b. et e. comprend la sélection d'un service de constitution en dehors d'une pluralité de services candidats.

**23.** Procédé selon la revendication 22, dans lequel
la sélection est réalisée en prenant en compte au moins l'une parmi des contraintes spécifiées dans les références de service contenues dans le squelette et des contraintes spécifiées dans une description de service associée aux services référencés.

**24.** Procédé selon la revendication 22 ou 23, dans lequel
la sélection est réalisée en prenant en compte des contraintes décrivant au moins l'une parmi des interactions et des dépendances entre deux services ou plus ou entre deux sessions ou plus.

**25.** Procédé selon l'une quelconque des revendications 13 à 24, dans lequel
le schéma de service comprend une pluralité de paramètres substituables de service, et chaque paramètre substituable de service comprend une référence de service à un ou plusieurs services candidats.

**26.** Procédé selon la revendication 25, dans lequel
la détermination effectuée à au moins l'une parmi les étapes d'analyse b. et e. comprend les étapes consistant à :

- déterminer, à partir d'une référence de service spécifique dans le schéma de service, un ensemble de services candidats ;
- évaluer une ou plusieurs contraintes associées à chaque service candidat de l'ensemble ; et
- sélectionner un service à partir de ces services candidats de l'ensemble qui ne transgresse aucune contrainte.

**27.** Procédé selon l'une quelconque des revendications 13 à 26, permettant en outre la création et/ou la modification des squelettes de services composites dans le réseau de télécommunications pour les service composites se rapportant à la au moins une session de télécommunications pour un utilisateur du réseau de télécommunications, le procédé comprenant l'étape consistant à prévoir une interface utilisateur adaptée pour créer et/ou modifier un squelette d'un service composite, le squelette spécifiant le schéma de service reliant logiquement une pluralité de références de service, le squelette comprenant une information qui permet l'analyse du squelette pendant l'exécution pour déterminer :

- les services de constitution qui forment le service composite ; et
- un déroulement des opérations d'exécution pour les services de constitution.

28. Produit-programme informatique comprenant des parties de code de programme pour réaliser les étapes selon l'une quelconque des revendications 1 à 27 lorsque le produit-programme informatique est exécuté sur un système informatique.

29. Produit-programme informatique selon la revendication 28, mémorisé sur un support d'enregistrement lisible sur un ordinateur.

30. Dispositif destiné à commander un processus de composition de service pour un service composite impliquant au moins une session de télécommunications pour un utilisateur d'un réseau de télécommunications, le dispositif étant adapté pour être déployé sur une plate-forme d'exécution de service à l'intérieur d'une couche application et comprenant :

a. une première interface adaptée pour recevoir, d'une couche commande de session (CSCF), un message se rapportant à une nouvelle session de télécommunications ou à une session de télécommunications existante (402) ;
b. un élément de messagerie adapté pour contacter un compositeur de service (54) par rapport à un service composite impliquant la session de télécommunications à laquelle le message appartient (404),
**caractérisé par**
c. une deuxième interface adaptée pour recevoir, du compositeur de service, une première commande (406) ;
d. un processeur adapté pour lancer l'exécution de la première commande (408) ;
e. un élément de détermination adapté pour déterminer une information d'exécution qui devient disponible en contexte avec l'exécution de la première commande (410) ; et
f. une troisième interface adaptée pour transmettre l'information d'exécution au compositeur de service (412).

31. Dispositif destiné à commander un processus de composition de service pour un service composite impliquant au moins une session de télécommunications pour un utilisateur d'un réseau de télécommunications, le dispositif comprenant :

a. une première interface adaptée pour recevoir, d'un élément d'exécution de service (52), une notification se rapportant à un service composite impliquant au moins une session de télécommunications (422),
**caractérisé par**
b. un élément d'analyse adapté pour analyser, pendant l'exécution, un squelette spécifiant un schéma de service pour le service composite pour déterminer au moins une première action devant être exécutée par l'élément d'exécution de service, dans lequel l'exécution correspond à une période de temps commençant avec la génération ou la réception d'un événement déclenchant ou à une période de temps couverte par le processus de composition et d'exécution (424) ;
c. une deuxième interface adaptée pour transmettre, vers l'élément d'exécution de service, une première commande se rapportant à la au moins une première action (426) ; et
d. une troisième interface adaptée pour recevoir, de l'élément d'exécution de service, une information d'exécution qui devient disponible en contexte avec l'exécution de la première commande (428).

**JSR116 Container**

Initialize SIP container

Read deployment description from sip.xml

Read static rules defining SIP servlet chaining

Wait for incoming SIP request

Find matching static SIP servlets chain

Route the SIP request according to the found chain

Produce a response if neccessary

**Fig. 1**

```
  ┌─────────────────────┐        ┌──────────────────┐
  │ BEA WLSS SIP Container│        │ Composer Servlet │
  └─────────────────────┘        └──────────────────┘
```

Initialize SIP container

Read deployment description from sip.xml

Read static rules SIP defining SIP servlets chaining

Wait for Incoming SIP request

Route the SIP request to a composer servlet

For current request, build at run-time a whole servlet chain at once

Give control back to the SIP container

pushRoute() all elements of the chain

Produce a response if neccessary

Route the SIP request according to the built chain

**Fig. 2**

Fig. 3A

EP 1 978 758 B1

**Fig. 3B**

400

RECEIVE, FROM A SESSION CONTROL
LAYER, A MESSAGE RELATING TO A NEW
OR AN EXISTING TELECOMMUNICATION
SESSION — 402

CONTACT A SERVICE COMPOSITOR
WITH RESPECT TO A COMPOSITE
SERVICE INVOLVING THE
TELECOMMUNICATION SESSION TO
WHICH THE MESSAGE PERTAINS — 404

RECEIVE, FROM THE SERVICE
COMPOSITOR, A COMMAND — 406

INITIATE EXECUTION OF THE FIRST
COMMAND — 408

DETERMINE RUN-TIME INFORMATION
THAT BECOMES AVAILABLE IN CONTEXT
WITH EXECUTION OF THE FIRST
COMMAND — 410

TRANSMIT THE RUN-TIME INFORMATION
TO THE SERVICE COMPOSITOR — 412

## Fig. 4A

420

RECEIVE, FROM A SERVICE EXECUTION
COMPONENT, A NOTIFICATION
RELATING TO A COMPOSITE SERVICE
INVOLVING AT LEAST ONE
TELECOMMUNICATION SESSION
— 422

ANALYSE, DURING RUN-TIME, A
SKELETON SPECIFYING A SERVICE
PATTERN FOR THE COMPOSITE SERVICE
TO DETERMINE AT LEAST ONE ACTION
TO BE PERFORMED BY THE SERVICE
EXECUTION COMPONENT
— 424

TRANSMIT, TO THE SERVICE EXECUTION
COMPONENT, A COMMAND RELATING TO
THE AT LEAST ONE ACTION
— 426

RECEIVE, FROM THE SERVICE
EXECUTION COMPONENT, RUN-TIME
INFORMATION THAT BECOMES
AVAILABLE IN CONTEXT WITH
EXECUTION OF THE COMMAND
— 428

**Fig. 4B**

440

RECEIVE A TRIGGER EVENT
REQUESTING AN EXECUTION OF A
COMPOSITE SERVICE RELATING TO AT
LEAST ONE TELECOMMUNICATION
SESSION FOR A USER OF THE
TELECOMMUNICATION NETWORK

442

RETRIEVE A SKELETON OF THE
REQUESTED COMPOSITE SERVICE, THE
SKELETON SPECIFYING A SERVICE
PATTERN LOGICALLY LINKING A
PLURALITY OF SERVICE REFERENCES

444

ANALYSE THE SKELETON DURING RUN-
TIME TO DETERMINE CONSTITUTING
SERVICES THAT FORM THE COMPOSITE
SERVICE AND AN EXECUTION
WORKFLOW FOR THE CONSTITUTING
SERVICES

446

TRIGGER EXECUTION OF THE
DETERMINED CONSTITUTING SERVICES
IN ACCORDANCE WITH THE
DETERMINED EXECUTION WORKFLOW

448

# Fig. 4C

**Fig. 5**

**Fig. 6A**

**Creation Tool** ～ 630

**Service**

Multi Service Composition Engine (MSCE) ～ 602

Service Database ～ 604

**600**

Composition Execution Agent (CEA) ～ 603

612

620

AR

Service

SIP Application

SIP Servlet

Service | Service

SIP Application

SIPServlet | SIP Servlet

SIP Container ～ 614

**Fig. 6B**

EP 1 978 758 B1

EP 1 978 758 B1

| Low-level layer of SIP container | CEA | MSCE | Dispatcher | Servlet |

**614**     **612**     **602**

SIP request

nextServlet=getNext()

1    2    3

Comp. ID   4

next service

5

execute command

6

execute servlet

7

execution

8

10

9

Outgoing signalling

Outgoing signalling

12    11

13

**Fig. 7A**

**Fig. 7B**

**Fig. 8**

Fig. 9

Start Element

**Fig. 10**

End element

**Fig. 11**

request_type=SIP

TRUE          FALSE

**Fig. 12**

(*number_of_user_sessions*>3) AND
(*user_profile.tariff*=PREPAID)

TRUE          FALSE

**Fig. 13**

*user_profile.tariff*

GOLD    SILVER    PREPAID    DEFAULT

**Fig. 14**

```
        ┌─────────────┐
        (    start    )
        └─────────────┘
               ⇓
        ┌─────────────┐
        │  black list │
        └─────────────┘
               ⇓
        ┌─────────────┐
        │  white list │
        └─────────────┘
               ⇓
        ┌─────────────┐
        │  busy check │
        └─────────────┘
               ⇓
        ┌─────────────┐
        │  charging   │
        └─────────────┘
               ⇓
        ┌─────────────┐
        │    VoIP     │
        └─────────────┘
               ⇓
        ┌─────────────┐
        (    end      )
        └─────────────┘
```

**Fig. 15**

49

```
                    ┌──────────────┐
                    │    start     │
                    └──────────────┘
                           ⇩
                    ┌──────────────┐
                    │  black list  │
                    └──────────────┘
                           ⇩
                    ┌──────────────┐
                    │  white list  │
                    └──────────────┘
                           ⇩
                    ┌──────────────┐
                    │  busy check  │
                    └──────────────┘
                           ⇩
                    ┌──────────────┐
                    │   charging   │
                    └──────────────┘
                           ⇩
                    ┌──────────────┐
                    │  VoIP, PoC   │
                    └──────────────┘
                           ⇩
                    ┌──────────────┐
                    │     end      │
                    └──────────────┘
```

**Fig. 16**

**Fig. 17**

**Fig. 18**

**Fig. 19**

## Fig. 20A

| Variable Id | Variable Type | Description | Example |
|---|---|---|---|
| request_type | String | Type of initial request. Possible values: WS, SIP | SIP |
| sip_request | String | Content of SIP request. This variable and all sub-variables sip_request.* exist only if SIP message was a request. | INVITE sip:bob@164.48.140.64:6061;trasnport=tcp SIP/2.0<br>From: "Alice"<br><sip:alice@164.48.140.64:6060>;tag=4024<br>Max-Forwards: 70<br>Content-Length: 36<br>Cseq: 1 INVITE<br>Contact:<br><sip:164.48.140.64:6060;transport=TCP><br>To: "Bob" <sip:bob@164.48.140.64:6061><br>Call-Id: 458ce635@164.48.140.64<br>Via: SIP/2.0/TCP<br>164.48.140.64:6060;branch=z9hG4bKb86d131ce1<br>5657ea66e13c8e5597d725<br><br>v=0<br>s=Phone Call<br>m=audio 49170 RTP/AVP |
| sip_request.method | String | Type of SIP request. e.g. INVITE, MESSAGE, etc | INVITE |
| sip_request.via | String | Via attribute of SIP message | SIP/2.0/TCP 164.48.140.64:6060;branch=z9hG4bKb86d131ce1 565 |
| sip_request.to | String | To attribute of SIP message | "Bob" <sip:bob@164.48.140.64:6061> |
| sip_request.to.display_name | String | | Bob |
| sip_request.to.host_port | String | | 164.48.140.64:6061 |
| sip_request.to.user_at_host | String | | bob@164.48.140.64:6061 |
| sip_request.to.tag | String | | 4024 |
| sip_request.from | String | From attribute of SIP message | "Alice"<br><sip:alice@164.48.140.64:6060>;tag=4024 |
| sip_request.from.display_name | String | | Alice |
| sip_request.from.host_port | String | | 164.48.140.64:6060 |
| sip_request.from.user_at_host | String | | alice@164.48.140.64:6060 |
| sip_request.from.tag | String | | |
| sip_request.content_length | Int | Length of SDP message body | 36 |
| sip_request.correlated | Boolean | TRUE if SIP request has a correlation tag | FALSE |
| sip_request.call_id | String | Call-Id attribute of SIP message | 504d8752@164.48.140.64 |
| sip_request.max_forwards | Int | Max-Forwards attribute of SIP message | 70 |
| sip_request.request_uri | String | URI from the first line of SIP message | sip:bob@164.48.140.64:6061;trasnport=tcp |
| sip_request.cseq | String | cseq attribute of SIP message | 1 INVITE |
| sip_request.first_line | String | First line of SIP message | INVITE sip:bob@164.48.140.64:6061;trasnport=tcp SIP/2.0 |
| sip_request.sip_version | String | SIP Version from first line of SIP message | SIP/2.0 |
| sip_request.contact | String | Contact attribute of SIP message | <sip:164.48.140.64:6060;transport=TCP> |
| sip_request.content | String | SDP message body | v=0<br>s=Phone Call<br>m=audio 49170 RTP/AVP |
| sip_response | String | Content of SIP response. This variable and all sub-variables sip_response.* exist only if SIP message was a response. | SIP/2.0 486 Busy Here<br>From: "Bob" <sip:bob@164.48.140.64:6061><br>Content-Length: 0<br>Cseq: 1 INVITE<br>Contact: <sip:164.48.140.64:5066><br>To: "Alice"<br><sip:alice@164.48.140.64:6060>;tag=4024 |

| | | | Call-Id: 458ce635@164.48.140.64 |
|---|---|---|---|
| sip_response.first_line | String | First line of SIP response | SIP/2.0 486 Busy Here |
| sip_response.sip_version | String | SIP Version from first line of SIP response | SIP/2.0 |
| sip_response.status_code | Int | Status code from first line of SIP response e.g. 200 for OK, 486 for BUSY, etc | 486 |
| sip_response.reason_phrase | String | Reason Phrase from first line of SIP response | Busy Here |
| sip_response.is_final_response | boolean | | TRUE |
| sip_response.cseq | String | Cseq attribute of SIP response | 1 INVITE |
| sip_response.from | String | From attribute of SIP response | "Bob" <sip:bob@164.48.140.64:6061> |
| sip_response.from.display_name | String | | Bob |
| sip_response.from.user_at_host | String | | bob@164.48.140.64:6061 |
| sip_response.from.host_port | String | | 164.48.140.64:6061 |
| sip_response.from.tag | String | | |
| sip_response.to | String | To attribute of SIP response | "Alice" <sip:alice@164.48.140.64:6060>;tag=4024 |
| sip_response.to.display_name | | | Alice |
| sip_response.to.user_at_host | | | alice@164.48.140.64:6060 |
| sip_response.to.host_port | | | 164.48.140.64:6060 |
| sip_response.to.tag | | | 4024 |
| sip_response.contact | String | Contact attribute of SIP response | <sip:164.48.140.64:5066> |
| sip_response.call_id | String | Call-Id attribute of SIP response | 458ce635@164.48.140.64 |
| sip_response.content_length | int | Length of SDP message body | 0 |
| sip_response.content | String | SDP message body | |
| skeleton | String | ID of initial Skeleton | voipSkeleton |
| skeleton.last_element | String | ID of last evaluated skeleton element | busy_check_bl |
| skeleton.last_element.skeleton_id | String | ID of skeleton of last evaluated skeleton element | voipSkeleton |
| skeleton.last_element.type | String | Type of last evaluated skeleton element | SERVICE TEMPLATE |
| skeleton.last_element.result | String | Result of last evaluation (uri of service or condition result) | sip@server.com |
| skeleton.next_element | String | ID of the next to be evaluated element of skeleton | checkUserProfile |
| skeleton.next_element.type | String | Type of the next to be evaluated element of skeleton | CONDITION |
| skeleton.executed_elements_count | int | Count of executed skeleton elements | 3 |
| sekeleton.executed_element1 | String | Id of first executed skeleton element | skeleton1 |
| sekeleton.executed_element1.skeleton_id | String | ID of Skeleton of the first element | voipSkeleton |
| sekeleton.executed_element1.type | String | Type of the first executed element | START |
| sekeleton.executed_element1.result | String | Result of evaluation of the first executed element | |
| sekeleton.executed_element2 | String | Second executed skeleton element | busy_check_wl |
| sekeleton.executed_element2.skeletonId | String | ID of Skeleton of the second element | voipSkeleton |
| sekeleton.executed_element2.type | String | Type of the second executed element | SERVICE TEMPLATE |
| sekeleton.executed_element2.result | String | Result of evaluation of the second executed element | busy_check_wl@server1.com |
| .... | | | |
| user_profile | String | Internal ID of user profile | bob_profile |
| user_profile.user_type | String | Type of user. e.g. normal, gold, etc. | normal |
| user_profile.preferred_audio_service | String | Preferred audio service e.g. voip, ptt, etc | ptt |

## Fig. 20B

Skeletons  Service Composition  Runtime Information

user count: 2
compositions count: 2
service count: 8
allocated ressources :..
etc ..

black list

white list

busy check

VoIP charging

VoIP

status check

IM charging

IM

**Fig. 21A**

**start_RedirectOnBusy skeleton**
Skeleton:RedirectOnBusy
Priority:0
Constraint:

**IsInvite?**
$(sip_request.method)

INVITE

**LeaveContainer**
*Constraints:*
(url=LeaveContainer)

**end1**

212

**IsBusyResponse?**
$(sip_response.status_code)

486

**NotifyOnBusy**
*Constraints:*
(url=NotifyOnBusy)

**end3**

214

**end2**

216

**Fig. 21B**

Fig. 22

MSCE Client

**Session information**

**SIP signalling**

**Graphical visualisation**

**Next SIP servlet**

Skeleton Execution

SessionId:

Skeleton: voipSkeleton

SIP Request INVITE

INVITE sip:bob@164.48.140.64:6061;trasport=tcp SIP/2.0
From: "Alice" <sip:alice@164.48.140.64:6060>;tag=4024
Max-Forwards: 70
Content-Length: 0
Cseq: 1 INVITE
Contact: <sip:164.48.140.64:6060;transport=TCP>
To: "Bob" <sip:bob@164.48.140.64:6061>
Call-Id: 7d8acfc7@164.48.140.64
Via: SIP/2.0/TCP 164.48.140.64:6060;branch=z9hG4bKb86d131ce15657ea66e13c8e559d7d726

SIP Response NONE

- sip_request
  - via
  - to
  - content-length
  - correlated
  - from
  - call-id
  - type
  - max-forwards
  - cseq
  - first_line
  - sip_version
  - method
  - content
  - contact
- skeleton
- user_profile
- request_type

Runtime V... Dispatchi...

Variable ID | Value

Service Execution Result: SUCCESSFUL   Next Step

Resulted Service Sequence:

——— Service 1 ———
Service Types:
  (PTTService)
  (SIPService)
  (abstractService)
Must Attributes:
  url: ptt_premium@provider1.com
  srv: sipptt_premium
  available: TRUE
May Attributes:
  audioCodec: G.711
  audioCodec: G.726
  description: Premium PTT Service over SIP
  provider: provider1
  constraints: (user.internet_connection>32kbps)

Skeleton View | Service Type View | Service View

START
voipSkeleton
priority:3

Template
(objectclass=whiteListService)

Template
(objectclass=blackListService)

Condition
(user.profile.preferred.audio.service)

PTT                          VOIP

Template                     Template
(objectclass=PTTService)     (objectclass=VoIPService)

Template                     Template
(&(objectclass=chargingService)  (&(objectclass=chargingService)
(chargingtype=PTT))          (chargingtype=voip))

END                          END

EP 1 978 758 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050125738 A1
- WO 9832293 A

- US 6330710 B1

### Non-patent literature cited in the description

- **K.F. Kocan.** A Novel Software Approach for Service Brokering in Advanced Service Architectures. *Bell Labs Technical Journal,* vol. 11 (1), 5-20